# EUROPEAN PATENT APPLICATION

(11) **EP 4 834 138 A1**
(43) Date of publication of application: **04.11.2026**
(21) Application number: 24913279.6
(22) Date of filing: 12.09.2024
(51) Int. Cl.: A24F 40/44, A24F 40/46, A24F 40/40, G02B 5/00, G02B 6/122, A24F 40/485

(54) **AEROSOL-GENERATING DEVICE COMPRISING CERAMIC WICK AND HEATER**

(30) Priority: 29.12.2023 KR 20230196296
(71) Applicant: KT&G Corporation, Daedeok-gu Daejeon 34337 (KR)
(72) Inventor: LEE, Won Kyeong, Guri-si Gyeonggi-do 11920 (KR); SEO, Jang Won, Daejeon 34023 (KR); WOO, Young Min, Hwaseong-si Gyeonggi-do 18391 (KR); JANG, Chul Ho, Bucheon-si Gyeonggi-do 14725 (KR); HAN, Dae Nam, Seoul 06331 (KR)
(74) Representative: Ter Meer und Partner mbB
(86) International application number: PCT/KR2024/013866
(87) International publication number: WO 2025/143438

(57) **Abstract**

This aerosol generating device may comprise: a reservoir for storing an aerosol-generating material; a ceramic wick for receiving the aerosol-generating material from the reservoir, and comprising a ceramic material; and a heater, provided to the ceramic wick, and for heating the aerosol-generating material by means of surface plasmon resonance.

## Description

### TECHNICAL FIELD

The disclosure relates to an aerosol generating device in general, for example, an aerosol generating device including a ceramic wick and a heater.

### BACKGROUND ART

Techniques for introducing airflows into an aerosol generating article are being developed to provide atomization performance. For example, aerosol generating devices that generate an aerosol from an aerosol generating article in a non-burning manner are being developed. The above description is information the inventor(s) acquired during the course of conceiving the present disclosure, or already possessed at the time, and is not necessarily art publicly known before the present application was filed.

### DISCLOSURE OF THE INVENTION

### TECHNICAL GOALS

An aspect of the disclosure provides an aerosol generating device including a ceramic wick. An aspect of the disclosure provides a heater heating an aerosol generating material by surface plasmon resonance. An aspect of the disclosure provides a heater increasing the efficiency of light use. An aspect of the disclosure provides an aerosol generating device including a heater with increased durability.

### TECHNICAL SOLUTIONS

An aerosol generating device includes a reservoir configured to store an aerosol generating material, a ceramic wick that is configured to receive the aerosol generating material from the reservoir and includes a ceramic material, and a heater that is configured to heat the aerosol generating material by surface plasmon resonance and is disposed in the ceramic wick.

The heater may include a substrate, and a plurality of metal particles arranged on the substrate.

The substrate may be configured to be coupled fit-to-fit to the ceramic wick.

The substrate may be attached to the ceramic wick.

The plurality of metal particles may form a metal layer.

The plurality of metal particles may form a plurality of metal prisms, and the plurality of metal prisms may define a void area surrounded by the plurality of metal prisms.

The plurality of metal particles may form a structure having a substantially single net shape, and the structure may define a plurality of void areas.

The plurality of metal particles may form a structure having a substantially single shape, and the structure may define a plurality of void areas having a serpentine shape.

The ceramic wick may further include a first wick end portion facing at least a portion of the reservoir, a second wick end portion that is opposite to the first wick end portion and faces at least a portion of the heater, and a wick extension extending between the first wick end portion and the second wick end portion, and the heater may include a plurality of metal particles deposited on the second wick end portion.

The second wick end portion may include a plurality of first areas and a second area different from the plurality of first areas, and the plurality of metal particles may be arranged in the plurality of first areas.

The aerosol generating device may include at least one light source configured to transmit light to the heater.

The at least one light source may include a light emitting diode, and the aerosol generating device may further include at least one convex lens disposed between the heater and the at least one light source.

The at least one light source may include a laser, and the aerosol generating device may further include at least one concave lens disposed between the heater and the at least one light source.

The heater may include a plurality of metal particles having a random size.

The aerosol generating device may further include an airflow path defined on a side of the reservoir.

### EFFECTS OF THE INVENTION

According to an embodiment, a heater may heat an aerosol generating material by surface plasmon resonance. According to an embodiment, a heater may be fixed to a proper position. The effects of an aerosol generating device including a ceramic wick and a heater, according to an embodiment, are not limited to the foregoing effects, and unstated effects may be clearly understood by those skilled in the art from the description below.

### BRIEF DESCRIPTION OF DRAWINGS

The foregoing and other aspects, features, and advantages of example embodiments in the disclosure will become apparent from the following detailed description with reference to the accompanying drawings.
FIG. 1 is a block diagram of an aerosol generating device according to an embodiment of the present disclosure.
FIG. 2 is a diagram illustrating an aerosol generating device according to an embodiment of the present disclosure.
FIG. 3 is a diagram illustrating an aerosol generating device according to another embodiment of the present disclosure.
FIG. 4 is a cross-sectional view of an aerosol generating device according to an embodiment of the present disclosure.
FIG. 5 is an exploded cross-sectional view of a body and a cartridge of an aerosol generating device according to an embodiment of the present disclosure.
FIG. 6 is an exploded perspective view of a first container of an aerosol generating device according to an embodiment of the present disclosure.
FIG. 7 is a perspective view of a bottom surface of the first container of the aerosol generating device according to an embodiment of the present disclosure.
FIG. 8 is a cross-sectional view of a first container of an aerosol generating device according to an embodiment of the present disclosure.
FIG. 9 is an exploded cross-sectional view of a first container and a second container of an aerosol generating device according to an embodiment of the present disclosure.
FIG. 10 is a cross-sectional view of coupling between the first container and the second container of the aerosol generating device according to an embodiment of the present disclosure.
FIG. 11 is a cross-sectional view of an airflow channel of the aerosol generating device according to an embodiment of the present disclosure.
FIG. 12 is a cross-sectional view of an aerosol generating device according to an embodiment.
FIG. 13 is a plan view of a heater according to an embodiment.
FIG. 14 is a plan view of a heater according to an embodiment.
FIG. 15 is a plan view of a heater according to an embodiment.
FIG. 16 is a plan view of a heater according to an embodiment.
FIG. 17 is a plan view of a heater according to an embodiment.
FIG. 18 is an enlarged cross-sectional view of a portion of an aerosol generating device according to an embodiment.
FIG. 19 is a plan view of a heater according to an embodiment.
FIG. 20 is an enlarged cross-sectional view of a portion of an aerosol generating device according to an embodiment.
FIG. 21 is an enlarged cross-sectional view of a portion of an aerosol generating device according to an embodiment.

### BEST MODE FOR CARRYING OUT THE INVENTION

Description will now be given in detail according to embodiments set forth herein with reference to the accompanying drawings. The same or equivalent components may be denoted by the same reference numerals, and description thereof will not be repeated.

Suffixes such as "module" and "unit" used for components in the following description are assigned or interchangeably used to facilitate description of the specification and do not have any special meanings or functions.

Further, in the description of embodiments set forth herein, a detailed description of well-known related arts will be omitted when it is deemed that such description will cause ambiguous interpretation of the embodiments. Further, the accompanying drawings are merely intended for easier understanding of the embodiments set forth herein, and the technical idea of the present disclosure is not limited thereto, and the embodiments should be understood to include all changes, equivalents, and replacements within the idea and the technical scope of the disclosure.

Terms, such as first, second, and the like, may be used to describe various components, but the components should not be limited by these terms. These terms are only used to distinguish one component from another component.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent.

The singular forms "a", "an", and "the" include the plural forms as well, unless the context clearly indicates otherwise.

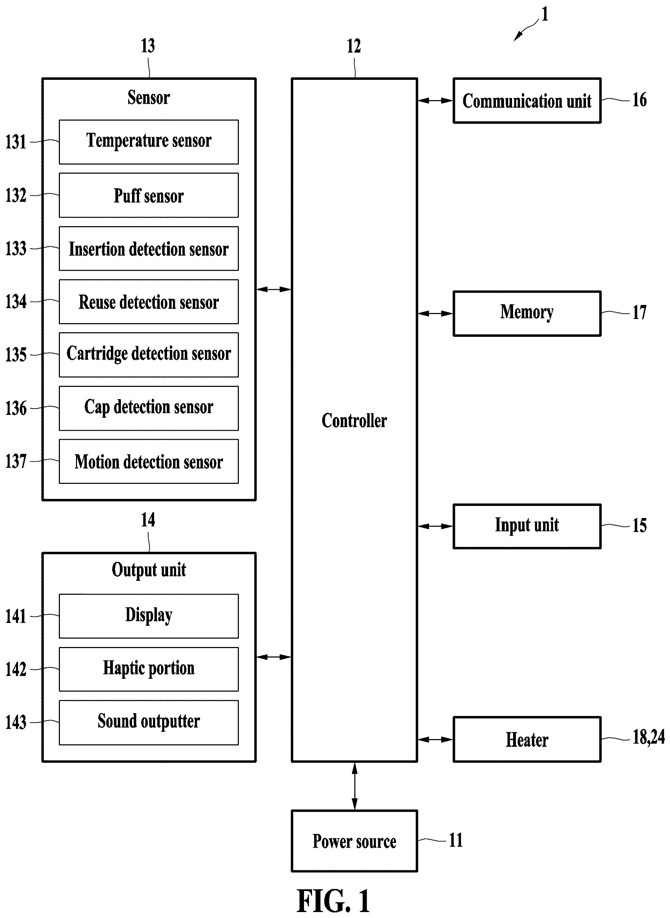

FIG. 1 is a block diagram of an aerosol generating device 1 according to an embodiment of the present disclosure.

The aerosol generating device 1 may include a power source 11, a controller 12, a sensor 13, an output unit 14, an input unit 15, a communication unit 16, a memory 17, and at least one heater 18, 24. However, an internal structure of the aerosol generating device 1 is not limited to what is shown in FIG. 1. It is to be understood by one of ordinary skill in the art to which the disclosure pertains that some of the components shown in FIG. 1 may be omitted or new components may be added according to the design of the aerosol generating device 1.

The sensor 13 may sense a state of the aerosol generating device 1 or a state of an environment around the aerosol generating device 1 and transmit sensed information to the controller 12. Based on the sensed information, the controller 12 may control the aerosol generating device 1 to control operations of the cartridge heater 24 and/or the heater 18, restrict smoking, determine whether a stick S and/or a cartridge 19 is inserted, display a notification, and perform other functions.

The sensor 13 may include at least one of a temperature sensor 131, a puff sensor 132, an insertion detection sensor 133, a reuse detection sensor 134, a cartridge detection sensor 135, a cap detection sensor 136, and a motion detection sensor 137.

The temperature sensor 131 may sense a temperature at which the cartridge heater 24 and/or the heater 18 is heated. The aerosol generating device 1 may include a separate temperature sensor to sense the temperature of the cartridge heater 24 and/or the heater 18, or the cartridge heater 24 and/or the heater 18 itself may serve as a temperature sensor.

The temperature sensor 131 may output a signal corresponding to the temperature of the cartridge heater 24 and/or the heater 18. For example, the temperature sensor 131 may include a resistive element whose resistance value changes in response to a change in the temperature of the cartridge heater 24 and/or the heater 18. The temperature sensor 131 may be implemented by a thermistor, which is an element that uses the property that the resistance changes depending on the temperature. At this time, the temperature sensor 131 may output a signal corresponding to the resistance value of the resistive element as the signal corresponding to the temperature of the cartridge heater 24 and/or the heater 18. For example, the temperature sensor 131 may be configured as a sensor for detecting the resistance value of the cartridge heater 24 and/or the heater 18. At this time, the temperature sensor 131 may output a signal corresponding to the resistance value of the cartridge heater 24 and/or the heater 18 as the signal corresponding to the temperature of the cartridge heater 24 and/or the heater 18.

The temperature sensor 131 may be disposed around the power source 11 to monitor the temperature of the power source 11. The temperature sensor 131 may be disposed adjacent to the power source 11. For example, the temperature sensor 131 may be attached to one surface of a battery, which is the power source 11. For example, the temperature sensor 131 may be mounted on one surface of a printed circuit board (PCB).

The temperature sensor 131 may be disposed inside a body 10 to sense the internal temperature of the body 10.

The puff sensor 132 may sense a puff from a user based on various physical changes in an airflow path. The puff sensor 132 may output a signal corresponding to the puff. For example, the puff sensor 132 may be a pressure sensor. The puff sensor 132 may output a signal corresponding to the internal pressure of the aerosol generating device 1. Here, the internal pressure of the aerosol generating device 1 may correspond to the pressure in an airflow path through which a gas flows. The puff sensor 132 may be disposed corresponding to the airflow path through which a gas flows in the aerosol generating device 1.

The insertion detection sensor 133 may sense the insertion and/or removal of the stick S. The insertion detection sensor 133 may sense a signal change according to the insertion and/or removal of the stick S. The insertion detection sensor 133 may be installed in the vicinity of an insertion space. The insertion detection sensor 133 may sense the insertion and/or removal of the stick S according to a change in the permittivity inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, if the magnetic field changes around the coil through which an electric current flows, the properties of the current flowing through the coil may change according to Faraday's law of electromagnetic induction. Here, the properties of the current flowing through the coil may include the frequency of alternating current, the current value, the voltage value, the inductance value, the impedance value, and the like.

The inductive sensor may output a signal corresponding to the properties of the current flowing through the coil. For example, the inductive sensor may output a signal corresponding to the inductance value of the coil.

The capacitance sensor may include a conductor. The conductor of the capacitance sensor may be disposed adjacent to the insertion space. The capacitance sensor may output a signal corresponding to the electromagnetic properties of the surroundings, for example, the capacitance around the conductor. For example, when a stick S including a metal wrapper is inserted into the insertion space, the electromagnetic properties around the conductor may change due to the wrapper of the stick S.

The reuse detection sensor 134 may sense whether the stick S is reused. The reuse detection sensor 134 may be a color sensor. The color sensor may sense the color of the stick. The color sensor may sense the color of a portion of the wrapper that wraps around the outside of the stick S. The color sensor may detect the value of the optical properties corresponding to the color of an object based on light reflected from the object. For example, the optical properties may be the wavelength of light. The color sensor may be implemented as a single component in conjunction with a proximity sensor or may be implemented as a separate component different from the proximity sensor.

At least a portion of the wrapper of the stick S may change in color due to an aerosol. The reuse detection sensor 134 may be disposed at a position corresponding to the position at which at least a portion of the wrapper that changes in color due to an aerosol is disposed when the stick S is inserted into the insertion space. For example, before the stick S is used by the user, the color of at least a portion of the wrapper may be a first color. At this time, as at least a portion of the wrapper is wet by the aerosol while the aerosol generated by the aerosol generating device 1 passes through the stick S, the color of the at least a portion of the wrapper may change to a second color. Meanwhile, the color of the at least a portion of the wrapper may be maintained as the second color after changing from the first color to the second color.

The cartridge detection sensor 135 may sense the insertion and/or removal of the cartridge 19. The cartridge detection sensor 135 may be implemented by an inductance-based sensor, a capacitive sensor, a resistance sensor, or a Hall sensor (e.g., Hall IC) using the Hall effect.

The cap detection sensor 136 may sense the mounting and/or removal of a cap. When the cap is detached from the body 10, a portion of the cartridge 19 and the body 10 covered by the cap may be exposed to the outside. The cap detection sensor 136 may be implemented by a contact sensor, a Hall sensor (e.g., Hall IC), an optical sensor, or the like.

The motion detection sensor 137 may sense a motion of the aerosol generating device 1. The motion detection sensor 137 may be implemented by at least one of an acceleration sensor and a gyro sensor.

In addition to the sensors 131 to 137 described above, the sensor 13 may further include at least one of a humidity sensor, a barometric pressure sensor, a magnetic sensor, a position sensor (e.g., global positioning system (GPS)), and a proximity sensor. A function of each of the sensors may be intuitively inferable from its name by one of ordinary skill in the art, and thus, a more detailed description thereof will be omitted here.

The output unit 14 may output information about the state of the aerosol generating device 1 and provide the information to the user. The output unit 14 may include at least one of a display 141, a haptic portion 142, or a sound outputter 143, but is not limited thereto. When the display 141 and a touchpad are provided in a layered structure to form a touchscreen, the display 141 may be used as an input device in addition to an output device.

The display 141 may visually provide information about the aerosol generating device 1 to the user. The information about the aerosol generating device 1 may include, for example, a charging/discharging state of the power source 11 of the aerosol generating device 1, a preheating state of the heater 18, an insertion/removal state of the stick S and/or the cartridge 19, a mounting/removal state of the cap, or a limited usage state (e.g., an abnormal article detected) of the aerosol generating device 1, or the like, and the display 141 may externally output the information. For example, the display 141 may be in the form of a light-emitting diode (LED) device. The display 141 may be, for example, a liquid-crystal display panel (LCD), an organic light-emitting display panel (OLED), or the like.

The haptic portion 142 may provide the information about the aerosol generating device 1 to the user in a haptic way by converting an electrical signal into a mechanical stimulus or an electrical stimulus. For example, the haptic portion 142 may generate vibrations corresponding to the completion of initial preheating when initial power is supplied to the cartridge heater 24 and/or the heater 18 for a set time. The haptic portion 142 may include, for example, a vibration motor, a piezoelectric element, or an electrical stimulation device.

The sound outputter 143 may provide the information about the aerosol generating device 1 to the user in an auditory way. For example, the sound outputter 143 may convert an electrical signal into a sound signal and externally output the sound signal.

The power source 11 may supply power to be used to operate the aerosol generating device 1. The power source 11 may supply power to heat the cartridge heater 24 and/or the heater 18. In addition, the power source 11 may supply power required for operations of the other components (e.g., the sensor 13, the output unit 14, the input unit 15, the communication unit 16, and the memory 17) included in the aerosol generating device 1. The power source 11 may be a rechargeable battery or a disposable battery. The power source 11 may be, for example, a lithium polymer (LiPoly) battery but is not limited thereto.

Although not shown in FIG. 1, the aerosol generating device 1 may further include a power protection circuit. The power protection circuit may be electrically connected to the power source 11 and may include a switching element.

The power protection circuit may cut off an electrical circuit for the power source 11 under a predetermined condition. For example, the power protection circuit may cut off the electrical circuit for the power source 11 when the voltage level of the power source 11 is greater than or equal to a first voltage corresponding to overcharging. For example, the power protection circuit may cut off the electrical circuit for the power source 11 when the voltage level of the power source 11 is less than a second voltage corresponding to overdischarging.

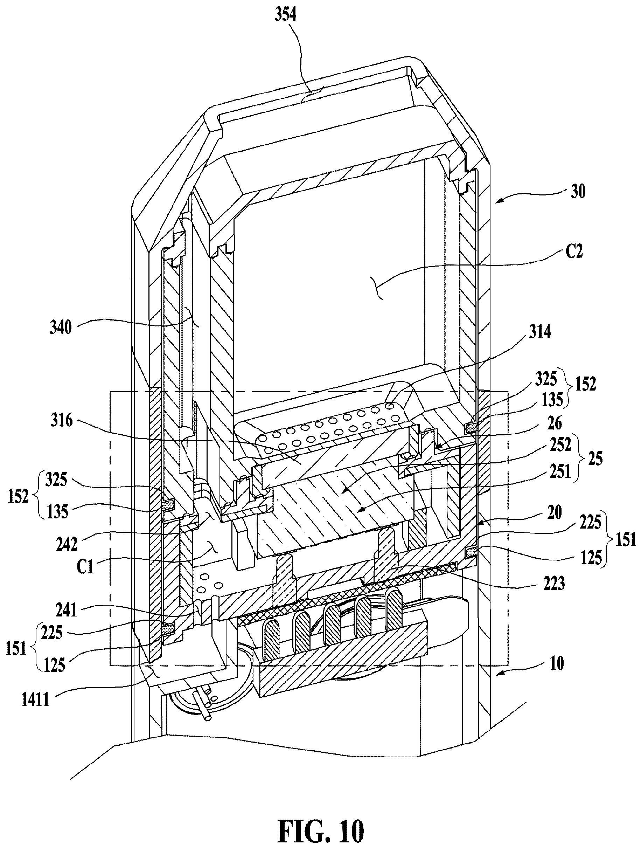

The heater 18 may receive power from the power source 11 to heat a medium or an aerosol generating material in the stick S. Although not shown in FIG. 10, the aerosol generating device 1 may further include a power conversion circuit (e.g., a direct current (DC)-to-DC (DC/DC) converter) that converts power of the power source 11 and supplies the power to the cartridge heater 24 and/or the heater 18. In addition, when the aerosol generating device 1 generates an aerosol in an induction heating manner, the aerosol generating device 1 may further include a DC-to-alternating current (AC) (DC/AC) converter that converts DC power of the power source 11 into AC power.

The controller 12, the sensor 13, the output unit 14, the input unit 15, the communication unit 16, and the memory 17 may receive power from the power source 11 to perform functions. Although not shown in FIG. 1, a power conversion circuit, for example, a low dropout (LDO) circuit or a voltage regulator circuit, which converts power of the power source 11 and supplies the power to respective components, may further be included. In addition, although not shown in FIG. 10, a noise filter may be provided between the power source 11 and the heater 18. The noise filter may be a low-pass filter. The low-pass filter may include at least one inductor and at least one capacitor. The cutoff frequency of the low-pass filter may correspond to the frequency of a high-frequency switching current applied from the power source 11 to the heater 18. The low-pass filter may prevent the application of a high-frequency noise component to the sensor 13, such as the insertion detection sensor 133.

In an embodiment, the cartridge heater 24 and/or the heater 18 may be formed of a predetermined electrically resistive material that is suitable. The electrically resistive material may be a metal or a metal alloy including, for example, titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 18 may be implemented as a metal heating wire, a metal heating plate on which an electrically conductive track is disposed, a ceramic heating element, or the like, but is not limited thereto.

In another embodiment, the heater 18 may be an induction heater. For example, the heater 18 may include a susceptor that heats the aerosol generating material by generating heat through a magnetic field applied by a coil.

The input unit 15 may receive information input from the user or may output information to the user. For example, the input unit 15 may be a touch panel. The touch panel may include at least one touch sensor for sensing a touch. For example, the touch sensor may include a capacitive touch sensor, a resistive touch sensor, a surface acoustic wave touch sensor, an infrared touch sensor, and the like, but is not limited thereto.

The display 141 and the touch panel may be implemented as a single panel. For example, the touch panel may be inserted into the display 141 (e.g., an on-cell type or in-cell type). For example, the touch panel may be added onto the display panel 141 (e.g., an add-on type).

Meanwhile, the input unit 15 may include a button, a keypad, a dome switch, a jog wheel, a jog switch, and the like, but is not limited thereto.

The memory 17, which is hardware for storing various pieces of data processed in the aerosol generating device 1, may store data processed by the controller 12 and data to be processed by the controller 12. The memory 17 may include at least one type of storage medium of flash memory-type memory, hard disk-type memory, multimedia card micro-type memory, card-type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, a magnetic disk, or an optical disk. The memory 17 may store an operating time of the aerosol generating device 1, a maximum number of puffs, a current number of puffs, at least one temperature profile, data associated with a smoking pattern of the user, or the like.

The communication unit 16 may include at least one component for communicating with another electronic device. For example, the communication unit 16 may include at least one of a short-range wireless communication unit and a wireless communication unit.

The short-range wireless communication unit may include a Bluetooth communication unit, a Bluetooth low energy (BLE) communication unit, a near-field communication unit, a WLAN (Wi-Fi) communication unit, a ZigBee communication unit, an infrared data association (IrDA) communication unit, a Wi-Fi direct (WFD) communication unit, an ultra-wideband (UWB) communication unit, and an Ant+ communication unit, but is not limited thereto.

The wireless communication unit may include, for example, a cellular network communication unit, an Internet communication unit, a computer network (e.g., a LAN or a wide-area network (WAN)) communication unit, and the like but is not limited thereto.

Although not shown in FIG. 1, the aerosol generating device 1 may further include a connection interface such as a universal serial bus (USB) interface and may be connected to another external device through the connection interface such as a USB interface to transmit and receive information or to charge the power source 11.

The controller 12 may control the overall operation of the aerosol generating device 1. In an embodiment, the controller 12 may include at least one processor. The processor may be implemented as an array of a plurality of logic gates or may be implemented as a combination of a general-purpose microprocessor and a memory in which a program executable by the microprocessor is stored. In addition, it is to be understood by one of ordinary skill in the art to which the disclosure pertains that it may be implemented in other types of hardware.

The controller 12 may control the temperature of the heater 18 by controlling the supply of power from the power source 11 to the heater 18. The controller 12 may control the temperature of the cartridge heater 24 and/or the heater 18 based on the temperature of the cartridge heater 24 and/or the heater 18 sensed by the temperature sensor 131. The controller 12 may adjust the power supplied to the cartridge heater 24 and/or the heater 18 based on the temperature of the cartridge heater 24 and/or the heater 18. For example, the controller 12 may determine a target temperature for the cartridge heater 24 and/or the heater 18 based on a temperature profile stored in the memory 17.

The aerosol generating device 1 may include a power supply circuit (not shown) electrically connected to the power source 11 between the power source 11 and the cartridge heater 24 and/or the heater 18. The power supply circuit may be electrically connected to the cartridge heater 24, the heater 18, or an induction coil (not shown). The power supply circuit may contain at least one switching element. The switching element may be implemented by a bipolar junction transistor (BJT), a field effective transistor (FET), or the like. The controller 12 may control the power supply circuit.

The controller 12 may control the power supply by controlling the switching of the switching element of the power supply circuit. The power supply circuit may be an inverter for converting direct current (DC) power output from the power source 11 into alternating current (AC) power. For example, the inverter may be configured as a half-bridge circuit or a full-bridge circuit including a plurality of switching elements.

The controller 12 may turn on the switching element to supply power from the power source 11 to the cartridge heater 24 and/or the heater 18. The controller 12 may turn off the switching element to cut off the supply of power to the cartridge heater 24 and/or the heater 18. The controller 12 may adjust the current supplied from the power source 11 by adjusting the frequency and/or duty ratio of the current pulse input to the switching element.

The controller 12 may control the voltage output from the power source 11 by controlling the switching of the switching element of the power supply circuit. A power conversion circuit may convert the voltage output from the power source 11. For example, the power conversion circuit may include a buck-converter for decreasing the voltage output from the power source 11. For example, the power conversion circuit may be implemented through a buck-boost converter, a Zener diode, or the like.

The controller 12 may adjust the level of voltage output from the power conversion circuit by controlling an ON/OFF operation of the switching element included in the power conversion circuit. During the ON state of the switching element, the level of voltage output from the power conversion circuit may correspond to the level of voltage output from the power source 11. The duty ratio for the ON/OFF operation of the switching element may correspond to the ratio of the voltage output from the power conversion circuit to the voltage output from the power source 11. As the duty ratio for the ON/OFF operation of the switching element decreases, the level of voltage output from the power conversion circuit may decrease. The heater 18 may be heated based on the voltage output from the power conversion circuit.

The controller 12 may control to supply power to the heater 18 using at least one of a pulse width modulation (PWM) scheme and a proportional-integral-differential (PID) scheme.

For example, the controller 12 may control to supply a current pulse with a predetermined frequency and a duty ratio to the heater 18, using the PWM scheme. The controller 12 may control the power supplied to the heater 18 by adjusting the frequency and duty ratio of the current pulse.

For example, the controller 12 may determine a target temperature, the target of the controlling, based on the temperature profile. The controller 12 may control the power supplied to the heater 18 using the PID scheme, which is a feedback control scheme through the difference value between the temperature of the heater 18 and the target temperature, the value obtained by integrating the difference value over time, and the value obtained by differentiating the difference value over time.

The controller 12 may prevent overheating of the cartridge heater 24 and/or the heater 18. For example, the controller 12 may control the operation of the power conversion circuit to stop supplying power to the cartridge heater 24 and/or the heater 18 based on the temperature of the cartridge heater 24 and/or the heater 18 exceeding a preset temperature limit. For example, the controller 12 may reduce the amount of power supplied to the cartridge heater 24 and/or the heater 18 by a predetermined proportion, based on the temperature of the cartridge heater 24 and/or the heater 18 exceeding the preset temperature limit. For example, the controller 12 may determine that the aerosol generating material accommodated in the cartridge 19 is exhausted based on the temperature of the cartridge heater 24 exceeding the temperature limit and cut off the power supply to the cartridge heater 24.

The controller 12 may control the charging and discharging of the power source 11. The controller 12 may verify the temperature of the power source 11 based on an output signal from the temperature sensor 131.

When a power line is connected to a battery terminal of the aerosol generating device 1, the controller 12 may verify whether the temperature of the power source 11 is greater than or equal to a first temperature limit which is the criterion for cutting off the charging of the power source 11. The controller 12 may control the power source 11 to be charged based on a preset charging current when the temperature of the power source 11 is less than the first temperature limit. The controller 12 may cut off the charging of the power source 11 when the temperature of the power source 11 is greater than or equal to the first temperature limit.

In a state in which the aerosol generating device 1 is powered on, the controller 12 may verify whether the temperature of the power source 11 is greater than or equal to a second temperature limit which is the criterion for cutting off the discharging of the power source 11. The controller 12 may control the power stored in the power source 11 to be used when the temperature of the power source 11 is less than the second temperature limit. The controller 12 may stop using the power stored in the power source 11 when the temperature of the power source 11 is greater than or equal to the second temperature limit.

The controller 12 may calculate the remaining capacity for the power stored in the power source 11. For example, the controller 12 may calculate the remaining capacity of the power source 11 based on the voltage of the power source 11 and/or the value of current sensed.

The controller 12 may determine whether the stick S is inserted into the insertion space through the insertion detection sensor 133. The controller 12 may determine that the stick S is inserted based on an output signal from the insertion detection sensor 133. When it is determined that the stick S is inserted into the insertion space, the controller 12 may control to supply power to the cartridge heater 24 and/or the heater 18. For example, the controller 12 may supply power to the cartridge heater 24 and/or the heater 18 based on the temperature profile stored in the memory 17.

The controller 12 may determine whether the stick S is removed from the insertion space. For example, the controller 12 may determine whether the stick S is removed from the insertion space through the insertion detection sensor 133. For example, the controller 12 may determine that the stick S is removed from the insertion space when the temperature of the heater 18 is greater than or equal to a temperature limit or when the gradient of the temperature change of the heater 18 is greater than or equal to a set gradient. When it is determined that the stick S is removed from the insertion space, the controller 12 may cut off the supply of power to the cartridge heater 24 and/or the heater 18.

The controller 12 may control the time of power supply and/or the amount of power supply to the heater 18 depending on the state of the stick S sensed by the sensor 13. The controller 12 may verify a level range including the level of a signal of the capacitance sensor based on a lookup table. The controller 12 may determine the amount of moisture in the stick S according to the verified level range.

When the stick S is in an over-humidified state, the controller 12 may increase the preheating time of the stick S compared to the case in which the stick S is in a normal state, by controlling the time of power supply to the heater 18.

The controller 12 may determine whether the stick S inserted into the insertion space is reused through the reuse detection sensor 134. For example, the controller 12 may compare a sensed value of a signal of the reuse detection sensor with a first reference range including a first color, and when the sensed value falls within the first reference range, determine that the stick S is unused. For example, the controller 12 may compare the sensed value of the signal of the reuse detection sensor with a second reference range including a second color, and when the sensed value falls within the second reference range, determine that the stick S is used. When it is determined that the stick S is used, the controller 12 may cut off the supply of power to the cartridge heater 24 and/or the heater 18.

The controller 12 may determine whether the cartridge 19 is coupled and/or decoupled, through the cartridge detection sensor 135. For example, the controller 12 may determine whether the cartridge 19 is coupled and/or decoupled based on a sensed value of a signal of the cartridge detection sensor.

The controller 12 may determine whether the aerosol generating material in the cartridge 19 is exhausted. For example, the controller 12 may preheat the cartridge heater 24 and/or the heater 18 by applying power, determine whether the temperature of the cartridge heater 24 exceeds the temperature limit in a preheating period, and determine that the aerosol generating material in the cartridge 19 is exhausted when the temperature of the cartridge heater 24 exceeds the temperature limit. When it is determined that the aerosol generating material in the cartridge 19 is exhausted, the controller 12 may cut off the supply of power to the cartridge heater 24 and/or the heater 18.

The controller 12 may determine the cartridge 19 is usable. For example, the controller 12 may determine that the cartridge 19 is unusable when the current number of puffs is greater than or equal to the maximum number of puffs set in the cartridge 19 based on the data stored in the memory 17. For example, the controller 12 may determine that the cartridge 19 is unusable when the total time for which the heater 24 is heated is greater than or equal to a preset maximum time or when the total amount of power supplied to the heater 24 is greater than or equal to a preset maximum amount of power.

The controller 12 may perform a determination about the inhalation of the user through the puff sensor 132. For example, the controller 12 may determine whether a puff occurs based on a sensed value of a signal of the puff sensor. For example, the controller 12 may determine the strength of the puff based on the sensed value of the signal of the puff sensor 132. When the number of puffs reaches the preset maximum number of puffs or when a puff is not detected for more than a preset time, the controller 12 may cut off the supply of power to the cartridge heater 24 and/or the heater 18.

The controller 12 may determine whether the cap is put on and/or taken off, through the cap detection sensor 136. For example, the controller 12 may determine whether the cap is put on and/or taken off based on a sensed value of a signal of the cap detection sensor.

The controller 12 may control the output unit 14 based on a result of sensing by the sensor 13. For example, when the number of puffs counted through the puff sensor 132 reaches a preset number, the controller 12 may inform the user that the aerosol generating device 1 is to be ended soon, through at least one of the display 141, the haptic portion 142, or the sound outputter 143. For example, the controller 12 may inform the user through the output unit 14 based on the determination that the stick S is absent from the insertion space. For example, the controller 12 may inform the user through the output unit 14 based on the determination that the cartridge 19 and/or the cap is not mounted. For example, the controller 12 may provide information on the temperature of the cartridge heater 24 and/or the heater 18 to the user through the output unit 14.

Based on the occurrence of a predetermined event, the controller 12 may store and update the history of the event that occurred in the memory 17. The event may include the detection of inserting the stick S, the initiation of heating the stick S, the detection of puffs, the end of puffs, the detection of overheating of the cartridge heater 24 and/or the heater 18, the detection of applying overvoltage to the cartridge heater 24 and/or the heater 18, the end of heating the stick S, the operation of powering ON/OFF the aerosol generating device 1, initiation of charging the power source 11, the detection of overcharging of the power source 11, the end of charging the power source 11, or the like, performed by the aerosol generating device 1. The history of the event may include the date and time the event occurred, log data corresponding to the event, and the like. For example, when the predetermined event is the detection of inserting the stick S, the log data corresponding to the event may include data on the sensed value of the insertion detection sensor 133. For example, when the predetermined event is the detection of overheating of the cartridge heater 24 and/or the heater 18, the log data corresponding to the event may include data on the temperature of the cartridge heater 24 and/or the heater 18, the voltage applied to the cartridge heater 24 and/or the heater 18, the current flowing in the cartridge heater 24 and/or the heater 18, and the like.

The controller 12 may control to form a communication link with an external device, such as a mobile terminal of the user. When authentication data is received from the external device via the communication link, the controller 12 may remove restrictions on the use of at least one function of the aerosol generating device 1. Here, the authentication data may include data indicating the completion of user authentication for the user corresponding to the external device. The user may perform user authentication through the external device. The external device may determine whether user data is valid based on the date of birth of the user, a unique number that identifies the user, and the like and receive data on the authority to use the aerosol generating device 1 from an external server. The external device may transmit data indicating the completion of user authentication to the aerosol generating device 1 based on the data on the authority to use. In response to the completion of the user authentication, the controller 12 may remove restrictions on the use of at least one function of the aerosol generating device 1. For example, in response to the completion of the user authentication, the controller 12 may remove restrictions on the use of a heating function that supplies power to the heater 18.

The controller 12 may transmit state data of the aerosol generating device 1 to the external device via the communication link with the external device. Based on the received state data, the external device may output the remaining capacity, the operation mode, and the like of the power source 11 of the aerosol generating device 1 through a display of the external device.

The external device may transmit a location search request to the aerosol generating device 1 based on an input that initiates a search for the location of the aerosol generating device 1. When the location search request is received from the external device, the controller 12 may control at least one of output devices to perform an operation corresponding to the location search based on the received location search request. For example, in response to the location search request, the haptic portion 142 may generate vibrations. For example, in response to the location search request, the display 141 may output an object corresponding to the location search and the end of the search.

When firmware data is received from the external device, the controller 12 may control to perform a firmware update. The external device may check the current version of the firmware for the aerosol generating device 1 and determine whether a new version of the firmware is present. When an input that requests a firmware download is received, the external device may receive a new version of firmware data and transmit the new version of firmware data to the aerosol generating device 1. When the new version of firmware data is received, the controller 12 may control to update the firmware of the aerosol generating device 1.

The controller 12 may transmit data on the sensed value of at least one sensor 13 through the communication unit 16 to an external server (not shown), receive a learning model generated by learning the sensed value through machine learning such as deep learning from the external server, and store the learning model. The controller 12 may perform an operation of determining an inhalation pattern of the user, an operation of generating a temperature profile, and the like using the learning model received from the external server. The controller 12 may store, in the memory 17, the sensed value data of at least one sensor 13 and the data used to train an artificial neural network (ANN). For example, the memory 17 may store a database for each component provided in the aerosol generating device 1, weights that form the structure of the ANN, and biases, for training the ANN. The controller 12 may generate at least one learning model that learns the data on the sensed value of at least one sensor 13, the inhalation pattern of the user, the temperature profile, and the like, stored in the memory 17, and is used to determine the inhalation pattern of the user and generate the temperature profile.

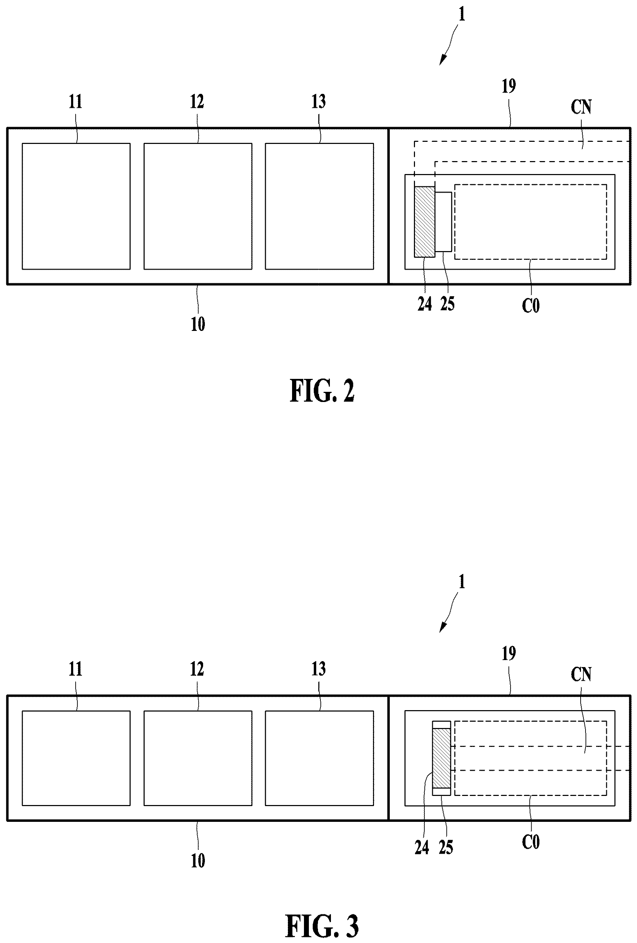

FIGS. 2 and 3 illustrate the aerosol generating device 1 according to embodiments of the present disclosure.

Referring to FIGS. 2 and 3, the aerosol generating device 1 may include the body 10 and the cartridge 19. The aerosol generating device 1 may include at least one of the power source 11, the controller 12, and the sensor 13. At least one of the power source 11, the controller 12, and the sensor 13 may be disposed inside the body 10. The cartridge 19, which is an aerosol generating article, may be mounted on the body 10. A user may inhale an aerosol holding a mouthpiece provided at one end of the cartridge 19 in the mouth.

The cartridge 19 may contain the aerosol generating material having any one of a liquid state, a solid state, a gaseous state, or a gel state in an internal chamber C0. The aerosol generating material may include a liquid composition. The liquid composition may be, for example, a liquid including a tobacco-containing material that includes a volatile tobacco flavor component or may be a liquid including a non-tobacco material.

The cartridge 19 may be detachably coupled to the body 10. The cartridge 19 may be inserted into the body 10 and thereby mounted on the body 10.

The body 10 may be formed in a structure in which the outside air may be introduced into the interior of the body 10 while the cartridge 19 is inserted thereinto. At this time, the outside air introduced into the body 10 may pass through the cartridge 19 and flow into the oral cavity of the user through an airflow channel CN.

The cartridge 19 may include the chamber C0 containing the aerosol generating material and/or the heater 24 to heat the aerosol generating material in the chamber C0. A liquid transfer means 25 impregnated with (containing) the aerosol generating material may be disposed inside the chamber C0. Here, the liquid transfer means 25 may include a wick, such as a cotton fiber, a ceramic fiber, a glass fiber, or a porous ceramic material. The electrically conductive track of the heater 24 may be formed in a coil-type structure that is wound around the liquid transfer means 25 or in a structure that is in contact with one side of the liquid transfer means 25. The heater 24 may be referred to as the cartridge heater.

The cartridge 19 may generate an aerosol. An aerosol may be generated as the liquid transfer means 25 is heated by the cartridge heater 24. The generated aerosol may be inhaled into the oral cavity of the user through the airflow channel CN.

The airflow channel CN may be provided in the cartridge 19. The airflow channel CN may communicate with a chamber C1 (see FIG. 3) in which the heater 24 of the cartridge 19 is disposed and the outside of the cartridge 19. One end of the airflow channel CN may be open to the chamber C1 in which the heater 24 is disposed, and the other end thereof may communicate with a mouthpiece 35. For example, referring to FIG. 2, the airflow channel CN may extend from one side of the chamber C0 of the cartridge 19 in the longitudinal direction of the cartridge 19. For example, referring to FIG. 3, the airflow channel CN may extend penetrating through the chamber C0 of the cartridge 19 in the longitudinal direction of the cartridge 19.

The power source 11 may supply power to operate the components of the aerosol generating device 1. The power source 11 may be referred to as the battery. The power source 11 may supply power to at least one of the controller 12, the sensor 13, and the cartridge heater 24.

The controller 12 may control the overall operation of the aerosol generating device 1. The controller 12 may be mounted on a printed circuit board (PCB). The controller 12 may control the operation of at least one of the power source 11, the sensor 13, and the cartridge 19. The controller 12 may control the operation of the display, a motor, and the like installed in the aerosol generating device 1. The controller 12 may verify a state of each of the components of the aerosol generating device 1 to determine whether the aerosol generating device 1 is in an operable state.

The controller 12 may analyze a sensing result obtained by the sensing of the sensor 13 and control processes to be performed thereafter. For example, the controller 12 may control power to be supplied to the cartridge heater 24 to start or end an operation of the cartridge heater 24 based on the sensing result obtained by the sensor 13. For example, the controller 12 may control an amount of power to be supplied to the cartridge heater 24 and a time for which the power is to be supplied, such that the cartridge heater 24 may be heated up to a predetermined temperature or maintained at a desired temperature, based on the sensing result obtained by the sensor 13.

The sensor 13 may include at least one of a temperature sensor, a puff sensor, a cartridge detection sensor, or a motion detection sensor. For example, the sensor 13 may sense at least one of the temperature of the cartridge heater 24, the temperature of the power source 11, or the temperature inside and outside the body 10. For example, the sensor 13 may sense a puff of the user. For example, the sensor 13 may sense whether the cartridge 19 is mounted. For example, the sensor 13 may sense a motion of the aerosol generating device 1.

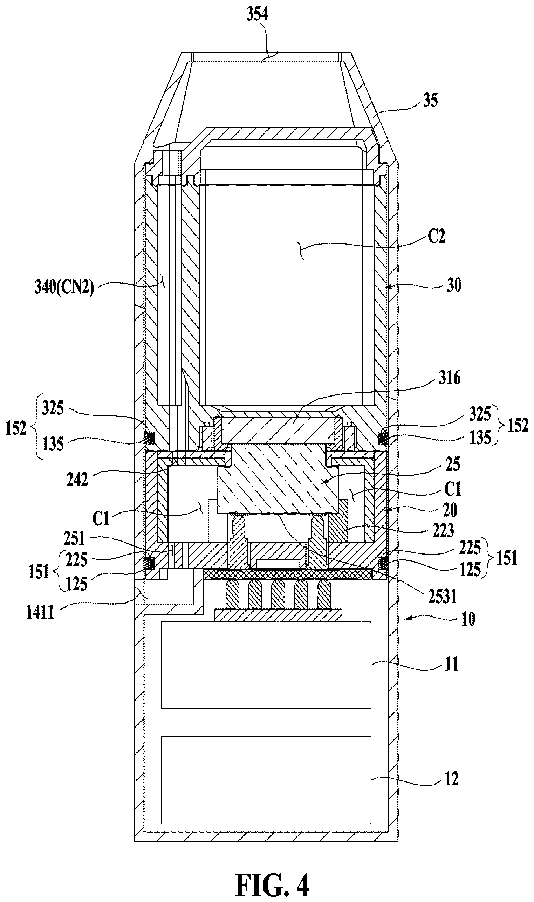

FIG. 4 is a cross-sectional view of an aerosol generating device according to an embodiment of the present disclosure.

Referring to FIG. 4, the aerosol generating device according to an embodiment may include the body 10 and the cartridge 19. The cartridge 19 may include a first container 20 and a second container 30. The cartridge 19 may be coupled to the body 10.

The body 10 may accommodate the power source 11 and the controller 12. The power source 11 may supply power required to operate the components. The power source 11 may be called the battery 11. The controller 12 may control the operation of the components.

The first container 20 may provide the first chamber C1 therein. The first container 20 may be provided with a wick 25. The wick 25 may be disposed in the first chamber C1. An upper end of the wick 25 may protrude from the first chamber C1 toward an upper side of the first container 20.

The first container 20 may be provided with a heater 2531. The heater 2531 may be disposed in the first chamber C1. The heater 2531 may heat the wick 25. The heater 2531 may be attached to the wick 25. The first container 20 may be provided with a second terminal 223 therein. The second terminal 223 may be exposed to a lower portion of the first container 20. The second terminal 223 may be electrically connected to the heater 2531. The first container 20 may be called the lower container 20 or the heating module 20.

The first container 20 may be provided with a first airflow inlet 241 formed as the first chamber C1 is open. The first container 20 may be provided with a first airflow outlet 242 formed as the first chamber C1 is open.

The second container 30 may provide a second chamber C2 therein. The second container 30 may store a liquid in the second chamber C2. The second container 20 may be provided with an airflow discharge channel 340. Both ends 341 and 342 of the airflow discharge channel 340 may be open. The airflow discharge channel 340 may be partitioned from the second chamber C2. The second container 30 may be called the upper container 30 or the liquid storage 30.

The mouthpiece 35 may be coupled to an upper side of the second container 30. The mouthpiece 35 may cover an upper portion of the second container 30. The mouthpiece 35 may be provided with a second airflow outlet 354 therein. The second airflow outlet 354 may communicate with the other end 342 of the airflow discharge channel 340.

The first container 20 may be coupled to the body 10. The first container 20 may be inserted into the body 10. When the first container 20 is coupled to the body 10, the heater 2531 may be electrically connected to the power source 11 through the second terminal 223. The heater 2531 may generate heat by receiving power from the power source 11. The heater 2531 may be a resistive heater.

The second container 30 may be coupled to the upper side of the first container 20. Coupling the second container 30 to the first container 20 may include coupling the second container 30 directly to the first container 20 and coupling the second container 30 to the body 10 and thereby indirectly to the first container 20.

When the second container 30 is coupled to the first container 20, the second container 30 may supply the stored liquid to the wick 25. The wick 25 may receive the liquid from the second container 30 and absorb the liquid. The heater 2531 may generate an aerosol in the first chamber C1 by heating the wick 25 having absorbed the liquid.

The body 10 may have one open side and thereby be provided with a second airflow inlet 1411. When the first container 20 is coupled to the body 10, the first airflow inlet 241 may communicate with the second airflow inlet 1411. When the second container 30 is coupled to the first container 20, one end 341 of the airflow discharge channel 340 and the first airflow outlet 242 may communicate with each other. Accordingly, a channel through which air flows may be formed. The user may inhale air while holding the mouthpiece 35 in the mouth. When the user inhales the air, the outside air may pass sequentially through the second airflow inlet 1411, the first airflow inlet 241, the first chamber C1, the first airflow outlet 242, the airflow discharge channel 340, and the second airflow outlet 354 and be provided to the user. Air may flow together with the aerosol generated in the first chamber C1.

Accordingly, the first container 20 and the second container 30 may be replaced independently of each other. For example, the consumption cycle of the liquid stored in the second container 30 and the appropriate replacement cycle of the first container 20 may be different from each other, and the user may replace only the second container 30 separately or only the first container 20 separately. For example, the consumption cycle of the liquid stored in the second container 30 may be shorter than the appropriate replacement cycle of the first container 20, and the first container 20 may be replaced only once while the second container 30 is replaced multiple times. Accordingly, the first container 20 may be used longer, and the cartridge replacement cost may be reduced.

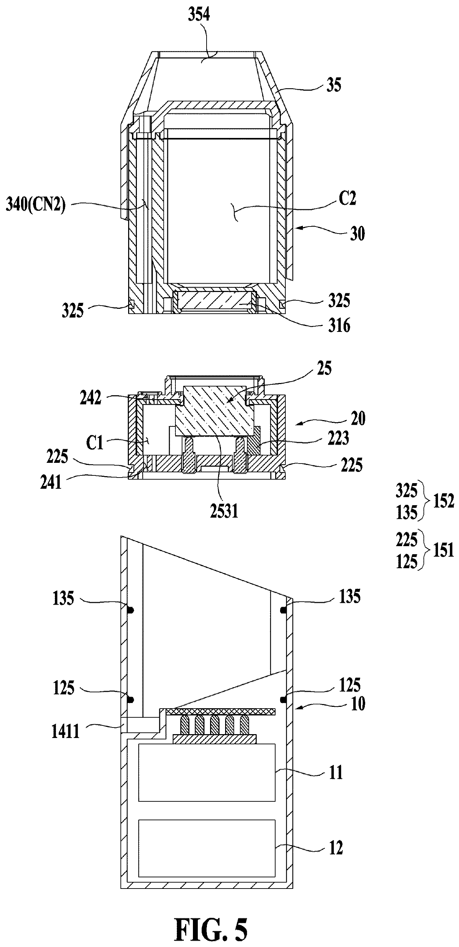

FIG. 5 is an exploded cross-sectional view of a body and a cartridge of an aerosol generating device according to an embodiment of the present disclosure.

Referring to FIG. 5, the first container 20 may be detachably coupled to the body 10. A first coupler 151 may detachably couple the first container 20 and the body 10. For example, the first coupler 151 may include a hook groove 225, and a hook 125 that is detachably fastened to the hook groove 225. The hook 125 may be formed of a material such as rubber or silicone and may seal between the body around the second airflow inlet 1411 and the first container 20. As another example, the first coupler 151 may couple the first container 20 and the body 10 by magnetism.

The second container 30 may be detachably coupled to the first container 20. The second container 30 may be coupled to the upper side of the first container 20. The second container 30 may be coupled to the body 10 and thereby indirectly to the first container 20. A second coupler 152 may detachably couple the second container 30 and the body 10. For example, the second coupler 152 may include a hook groove 325, and a hook 135 that is detachably fastened to the hook groove 325. As another example, the second coupler 152 may couple the second container 30 to the body 10 by magnetism.

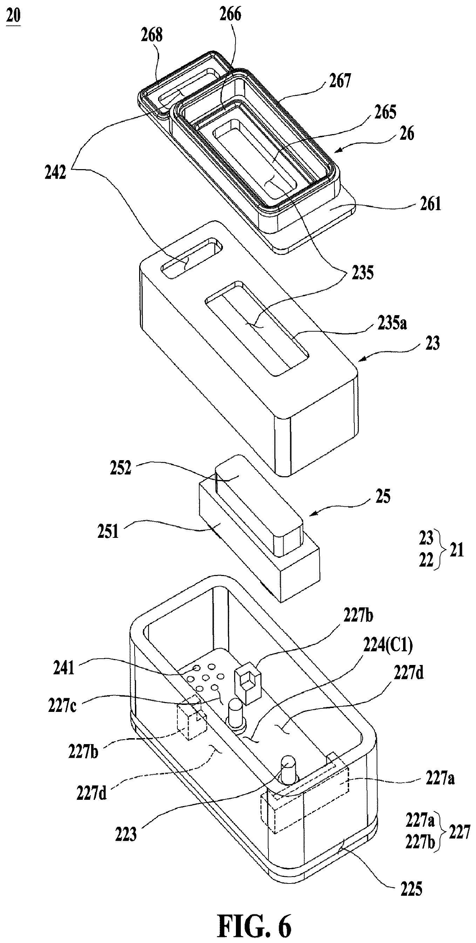

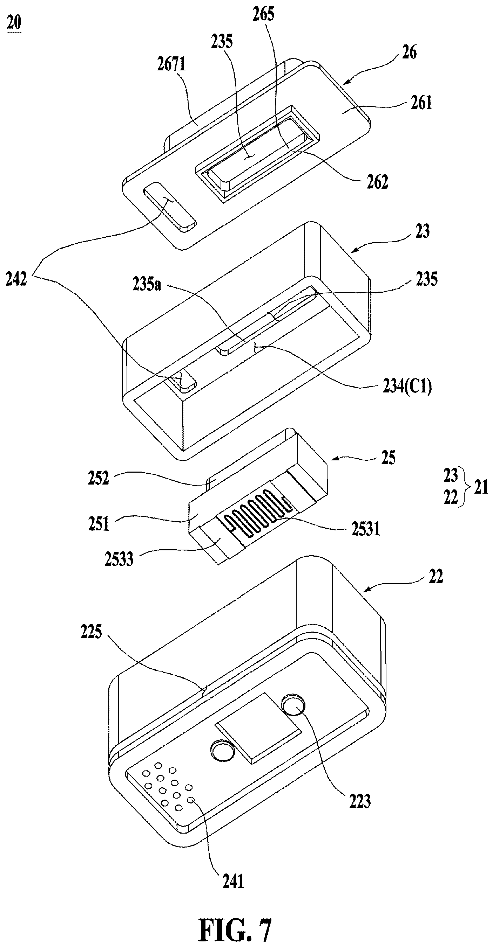

FIG. 6 is an exploded perspective view of a first container of an aerosol generating device according to an embodiment of the present disclosure, and FIG. 7 is a perspective view of a bottom surface of the first container of the aerosol generating device according to an embodiment of the present disclosure.

Referring to FIG. 6, the first container 20 may include a case 21, the wick 25, and the heater 2531 (see FIG. 7). The case 21 may include a first case 22 and a second case 23.

The second case 23 may be coupled to an upper side of the first case 22. The first case 22 may be open upward and may be provided with a space 224 to form the first chamber C1. The second case 23 may be open downward and may be provided with a space 234 to form the first chamber C1. The first case 22 and the second case 23 may be coupled up and down to form the first chamber C1 therein.

The second terminal 223 may be secured to the bottom of the first case 22 and exposed to a lower portion of the first case 22. The second terminal 223 may protrude upward from the first case 22 toward the first chamber C1. A pair of second terminals 223 may be provided to be spaced apart from each other horizontally.

The first airflow inlet 241 may be formed at the bottom of the first case 22. A plurality of first airflow inlets 241 may be formed in a porous shape. The first airflow inlet 241 may be spaced apart from the second terminal 223 in a horizontal direction. The first airflow inlet 241 may be formed as the lateral wall of the first case 22 and/or the lateral wall of the second case 23 is open.

The case 21 may be provided with one component of the first coupler 151. For example, the hook groove 225 may be formed as a lower perimeter of the first case 22 is recessed. As another example, the hook 125 may be formed as the lower perimeter of the first case 22 protrudes. As another example, the first case 21 may be provided with a magnet or a ferromagnetic body.

The first airflow outlet 242 may be formed at an upper wall of the second case 23. As another example, the first airflow outlet 242 may be formed at the lateral wall of the second case 23. The first airflow outlet 242 may be formed at a position facing the first airflow inlet 241.

A liquid inlet 235 may be formed at the upper wall of the second case 23. The liquid inlet 235 may be formed on an upper side of the first chamber C1. The liquid inlet 235 may be partitioned from the first airflow outlet 242. The liquid inlet 235 may be formed on one side of the upper wall of the second case 23, and the first airflow outlet 242 may be formed on the other side of the upper wall of the second case 23. The liquid inlet 235 may be formed on a side corresponding to the second terminal 223 and a supporter 227, and the first airflow outlet 242 may be formed on a side corresponding to the first airflow inlet 241.

The wick 25 may include a first wick part 251 and a second wick part 252. The first wick part 251 may be disposed in the first chamber C1 between the first case 22 and the second case 23. A lower edge of the first wick part 251 may be supported by the supporter 227.

The second wick part 252 may protrude upward from the first wick part 251. The second wick part 252 may be exposed to the outside of the first chamber C1 through the liquid inlet 235. The second wick part 252 may protrude upward through the liquid inlet 235 and a first wick sealing portion 265.

Referring to FIG. 7, the heater 2531 may be coupled to the first wick part 251. The heater 2531 may heat the first wick part 251. First terminals 2533 formed at both ends of the heater 2531 may be in contact with the second terminal 223 and electrically connect the heater 2531 and the second terminal 233.

The supporter 227 may protrude upward from the bottom of the first case 22. The supporter 227 may be formed in the vicinity of the second terminal 223. A plurality of supporters 227 may be provided and arranged in the vicinity of the second terminal 223. The supporter 227 may include a first supporter 227a and a second supporter 227b. The first supporter 227a and the second supporter 227b may be disposed in an area corresponding to the lower edge of the first wick part 251.

The first supporter 227a and the second supporter 227b may be spaced apart from each other. The second supporter 227b may be formed at a position adjacent to the first airflow outlet 242. The second supporter 227b may be formed between the second terminal 223 and the first airflow inlet 241. A pair of second supporters 227b may be formed. The pair of second supporters 227b may be spaced apart from each other to form a first gap 227c therebetween. The first supporter 227a and the second supporter 227b may be spaced apart from each other to form a second gap 227d therebetween.

A sealer 26 may be coupled to the upper side of the first container 20. A sealing plate 261 of the sealer 26 may cover an upper surface of the case 21. The sealer 26 may be formed of an elastic material. For example, the sealer 26 may be formed of rubber or silicone.

The sealer 26 may include the first wick sealing portion 265. The first wick sealing portion 265 may be formed as the sealing plate 261 is open at a position corresponding to the liquid inlet 235. The first wick sealing portion 265 may form one inner perimeter surface of the sealing plate 261. The first wick sealing portion 265 may have a shape corresponding to a perimeter surface 235a surrounding the liquid inlet 235. The first wick sealing portion 265 may protrude downward from the sealing plate 261 and be in close contact with the inner side of the perimeter surface 235a of the liquid inlet 235. The second wick part 252 may protrude through the first wick sealing portion 265 toward an upper side of the liquid inlet 235.

The sealer 26 may include a second wick sealing portion 262. The second wick sealing portion 262 may protrude downward from a lower surface of the sealing plate 261. The second wick sealing portion 262 may be formed on a lower side of the first wick sealing portion 265 or may be formed on a lower side around the first wick sealing portion 265. The second wick sealing portion 262 may extend along the perimeter of the first wick sealing portion 265.

The sealer 26 may include a sealing wall 266, 267 protruding upward from an upper surface of the sealing plate 261. The sealing wall 266, 267 may surround the liquid inlet 235 and the first wick sealing portion 265. The sealing wall 266, 267 may extend along the perimeter of the first wick sealing portion 265 to form the perimeter. A plurality of sealing walls 266, 267 may be formed. For example, the sealing wall 266, 267 may include a first sealing wall 266 adjacent to the vicinity of the first wick sealing portion 265 and a second sealing wall 267 spaced outward apart from the first sealing wall 266. The second sealing wall 267 may protrude upward to be higher than the first sealing wall 266. The second sealing wall 267 may surround the first sealing wall 266.

The sealer 26 may include an airflow sealing portion 268. The airflow sealing portion 268 may surround the first airflow outlet 242. The airflow sealing portion 268 may protrude upward from the upper surface of the sealing plate 261. The second sealing wall 267 may protrude to be higher than the airflow sealing portion 268. The airflow sealing portion 268 may be formed on the outside of the sealing wall 266, 267.

The wick 25 may be formed into a porous rigid body that absorbs a liquid. For example, the wick 25 may be formed of a porous ceramic. The wick 25 may have stronger rigidness or heat resistance than a cotton wick.

Accordingly, the wick 25 may be implemented in a shape with no or little deformation and in various shapes. In addition, the durability of the wick 25 may improve, and the replacement cycle of the first container 20 provided with the wick 25 may increase.

The first wick part 251 may extend toward one side in a horizontal direction. The first wick part 251 may have a hexahedral shape. An upper surface of the first wick part 251 may be formed horizontally. A lower surface of the first wick part 251 may be formed horizontally. A side surface of the first wick part 251 may be formed between an upper perimeter and a lower perimeter to define the perimeter of the first wick part 251. The side surface of the first wick part 251 may be called the perimeter surface of the first wick part 251.

The second wick part 252 may protrude upward from the center of the upper surface of the first wick part 251. The second wick part 252 may extend in a horizontal direction. The second wick part 252 may have a hexahedral shape. An upper surface of the second wick part 252 may be formed horizontally. A lower surface of the second wick part 252 may be formed horizontally. The lower surface of the second wick part 252 may overlap an upper surface of the first wick part 251. A side surface of the second wick part 252 may be formed between an upper perimeter and a lower perimeter to define the perimeter of the second wick part 252. The side surface of the second wick part 252 may be called the perimeter surface of the second wick part 252.

The first wick part 251 may be greater than the second wick part 252. The perimeter of the upper surface of the first wick part 251 may be greater than the perimeter of the upper surface of the second wick part 252. The height of the first wick part 251 may be greater than the height of the second wick part 252. The length of the first wick part 251 may be greater than the length of the second wick part 252. The width of the first wick part 251 may be greater than the width of the second wick part 252.

The first wick part 251 may protrude further by a predetermined width from the lower surface of the second wick part 252 outward in a horizontal direction. The second wick part 252 may protrude from the inner side of the perimeter of the upper surface of the first wick part 251. The perimeter of the upper surface of the first wick part 251 may protrude toward the outside of the lower surface of the second wick part 252.

The heater 2531 may be attached to the first wick part 251. The heater 2531 may form a pattern on the lower surface of the first wick part 251. The heater 2531 may form a variety of patterns in the longitudinal direction of the first wick part 251. Both ends of the heater 2531 may be adjacent to both ends of the first wick part 251.

The pair of first terminals 2533 may be formed at both end portions of the heater 2531. The first terminals 2533 may be coupled to the lower surface of the first wick part 251. The pair of first terminals 2533 may be adjacent to both ends of the first wick part 251. The first terminals 2533 may protrude toward the lower side of the first wick part 251.

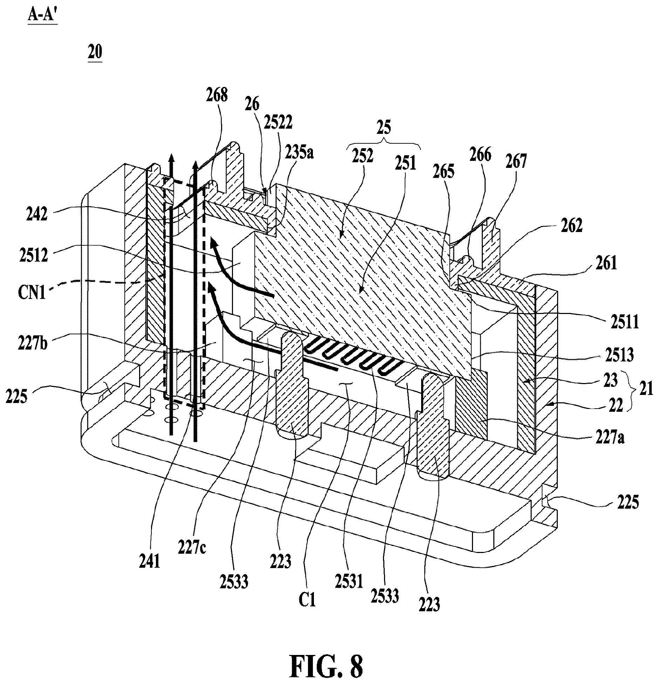

FIG. 8 is a cross-sectional view of a first container of an aerosol generating device according to an embodiment of the present disclosure.

Referring to FIG. 8, the first airflow inlet 241 may be formed on the lower side of the first chamber C1. The first airflow outlet 242 may be formed on the upper side of the first chamber C1. The first airflow inlet 241 and the first airflow outlet 242 may be formed side by side vertically. The wick 25 may be disposed on the right side of the first chamber C1, and the first airflow inlet 241 and the first airflow outlet 242 may be formed on the left side of the first chamber C1. A first channel CN1 may be formed on the left side of the first chamber C1 and may be provided with the first airflow inlet 241 and the first airflow outlet 242. Air may be introduced into the first channel CN1 through the first airflow inlet 241 and discharged through the first airflow outlet 242.

The first terminals 2533 may be in contact with the second terminal 223 and electrically connect the heater 2531 and the second terminal 223. The second terminal 223 may support the first terminals 2533 and a lower surface 2513 of the first wick part 251.

A lower portion of the first wick part 251 may be supported by the supporter 227. An upper surface 2511 of the first wick part 251 may be supported by the second case 23 and/or a lower portion of the second wick sealing portion 262, in the vicinity of the liquid inlet 235. The perimeter of a side portion 2522 of the second wick part 252 may be supported by the perimeter surface 235a of the liquid inlet 235 and/or an inner surface of the first wick sealing portion 265.

Accordingly, the wick 25 may be secured to the first container 20.

The supporter 227 may cause the first wick part 251 to be spaced apart from the bottom of the first chamber C1 upward. The supporter 227 may be disposed in the vicinity of the heater 2531. The supporter 227 may form the gap 227c, 227d that causes the heater 2531 attached to the lower surface 2513 of the first wick part 251 to communicate with the first chamber C1. The supporter 227 may be open between the first channel CN1 and the heater 2531 and form the first gap 227c.

The supporter 227 may include a first supporter 227a and a second supporter 227b. The second supporter 227b may be disposed more adjacent to the first airflow inlet 241 and the first airflow outlet 242 than the first supporter 227a. The first airflow inlet 241 and the first airflow outlet 242 may be adjacent to the left side of the first wick part 251. The first supporter 227a may extend along the right edge between the lower surface 2513 and a side surface 2512 of the first wick part 251. The first supporter 227a may support the vicinity of the right edge between the lower surface 2513 and the side surface 2512 of the first wick part 251. A pair of second supporters 227b may support the vicinity of the left vertex of the first wick part 251.

A pair of second supporters 227b may be spaced apart from each other to form the first gap 227c that allows air to flow between the vicinity of the heater 2531 and the first airflow outlet 242. The first supporter 227a and the second supporter 227b may be spaced apart from each other to form the second gap 227d that allows air to flow between the vicinity of the heater 2531 and the first airflow outlet 242. The first gap 227c and the second gap 227d may be formed in the vicinity of the lower surface 2513 of the first wick part 251.

Accordingly, the aerosol generated by the wick 25 and the air around may flow smoothly through the vicinity of the pair of supporters 227 toward the first airflow outlet 242.

The first wick sealing portion 265 may be disposed between the perimeter surface 2522 of the second wick part 252 and the perimeter surface 235a of the liquid inlet 235. The inner perimeter surface of the first wick sealing portion 265 may be in close contact with the perimeter surface 2522 of the second wick part 252. The first wick sealing portion 265 may seal between the perimeter surface 2522 of the second wick part 252 and the perimeter surface 235a of the liquid inlet 235.

The perimeter of the upper surface 2511 of the first wick part 251 may be greater than the perimeter of the liquid inlet 235. The perimeter of the upper surface 2511 of the first wick part 251 may be formed horizontally more outward than the perimeter of the liquid inlet 235. The edge portion of the first wick part 251 may absorb liquid leaking between the liquid inlet 235 and the perimeter surface 2522 of the second wick part 252.

The second wick sealing portion 262 may protrude downward from the vicinity of the liquid inlet 235 toward the upper surface 2511 of the first wick part 251. The second wick sealing portion 262 may be in close contact with the upper surface 2511 of the first wick part 251. The second wick sealing portion 262 may support the upper surface 2511 of the first wick part 251.

Accordingly, it may be possible to prevent the liquid supplied from the second container 30 to the wick 25 from leaking into the first chamber C1 through between the second wick part 252 and the perimeter surface 235a of the liquid inlet 235 without being absorbed into the wick 25.

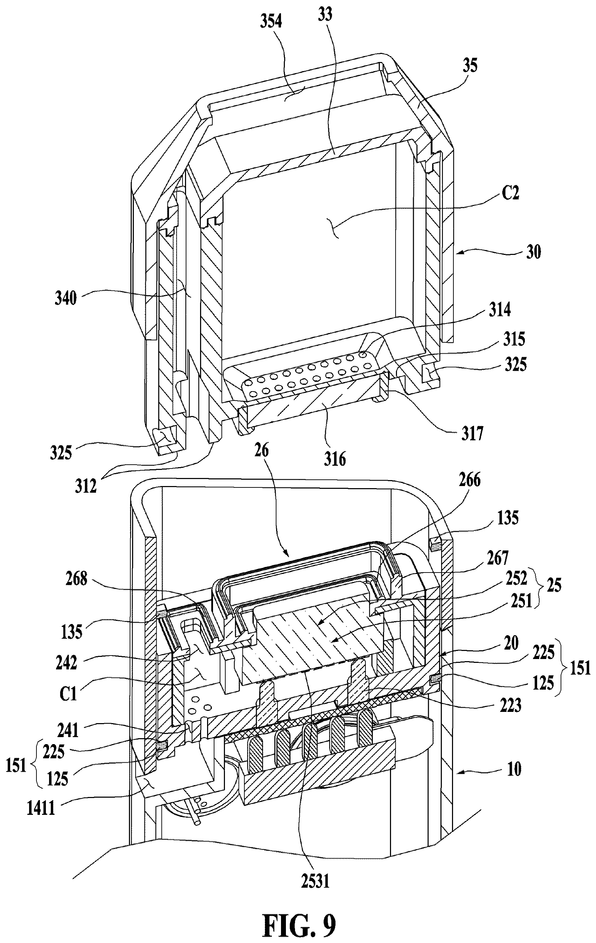

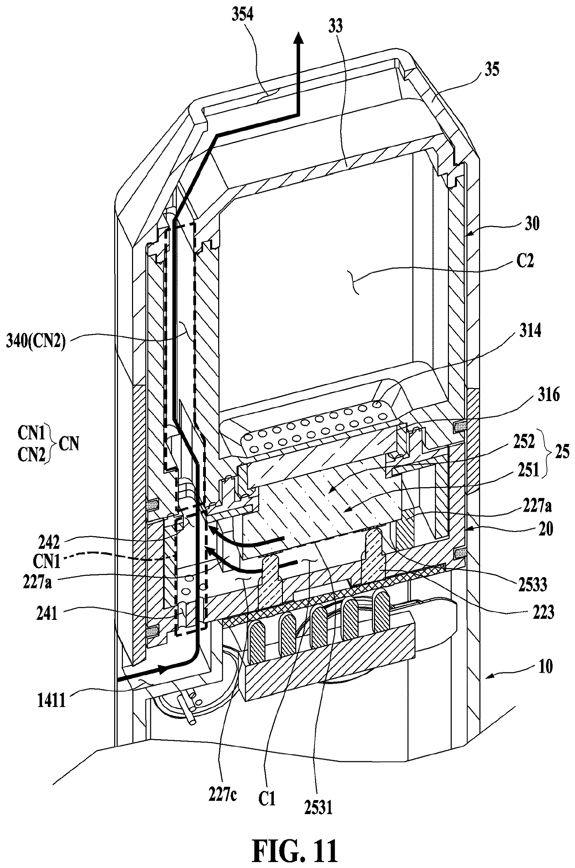

FIG. 9 is an exploded cross-sectional view of a first container and a second container of an aerosol generating device according to an embodiment of the present disclosure, FIG. 10 is a cross-sectional view of coupling between the first container and the second container of the aerosol generating device according to an embodiment of the present disclosure, and FIG. 11 is a cross-sectional view of an airflow channel of the aerosol generating device according to an embodiment of the present disclosure.

Referring to FIG. 9, the second container 30 may provide a second chamber C2 to store a liquid. A liquid outlet 314 may be formed as the second chamber C2 is open. The liquid outlet 314 may be formed in a lower portion of the second chamber C2. The liquid outlet 314 may include a plurality of holes. The liquid stored in the second chamber C2 may be discharged through the liquid outlet 314.

An absorbing portion 316 may block the lower portion of the liquid outlet 314. The absorbing portion 316 may absorb the liquid passing through the liquid outlet 314. For example, the absorbing portion 316 may be formed of a felt material.

A bracket 317 may protrude from the vicinity of the liquid outlet 314 to a lower side of the second container 30. The bracket 317 may surround the lateral perimeter of the absorbing portion 316. The absorbing portion 316 may be exposed from the bracket 317 to a lower side of the second container 30. The bracket 317 may secure the absorbing portion 316 to a lower portion of the second container 30. The bracket 317 may support a lower perimeter of the absorbing portion 316 in the form of a hook.

A film may be detachably attached to a lower surface of the absorbing portion 316. The edge of the film may be attached to a lower surface of the bracket 317. The film may be formed of waterproof material. The film may prevent liquid leakage from the absorbing portion 316. Before coupling the second container 30 to the first container 20, a user may detach the film from the absorbing portion 316.

A recessed portion 315 may be formed as a lower surface 312 of the second container 30 is recessed upward. A groove formed by the recessed portion 315 may surround the bracket 317.

The second container 30 may be provided with one component of the second coupler 152. For example, the hook groove 325 may be formed as an outer wall of the second container 30 is recessed. As another example, the hook 135 may be formed as the outer wall of the second container 30 protrudes. As another example, the second container 30 may be provided with a magnet or a ferromagnetic body.

The second container 30 may provide the airflow discharge channel 340. The airflow discharge channel 340 may be partitioned from the second chamber C2 by an inner wall of the second container 30. The airflow discharge channel 340 may be defined by the outer wall and the inner wall of the second container 30. Both ends of the airflow discharge channel 340 may be open. One end of the airflow discharge channel 340 may be open downward. The other end of the airflow discharge channel 340 may be open upward. The one end of the airflow discharge channel 340 may be formed as the lower surface 312 of the second container 30 is open. The other end of the airflow discharge channel 340 may communicate with the second airflow outlet 354 formed inside the mouthpiece 35. The airflow discharge channel 340 may be called a second channel CN2.

Referring to FIG. 10, the first container 20 may be detachably coupled to the body 10. The first coupler 151 may detachably couple the first container 20 and the body 10. The second container 30 may be detachably coupled to the first container 20. The second container 30 may be coupled to the body 10 through the second coupler 152, thereby being indirectly coupled to the first container 20. The second container 30 may be coupled to the upper side of the first container 20.

When the second container 30 is coupled with the first container 20, the second container 30 may supply a liquid to the wick 25. The liquid stored in the second chamber C2 may pass through the liquid outlet 314 and be absorbed into the absorbing portion 316, and the absorbing portion 316 having absorbed the liquid may be in contact with the second wick part 252 and transfer the liquid thereto. The liquid absorbed into the second wick part 252 may diffuse to the first wick part 251. The heater 2531 may generate an aerosol by heating the first wick part 251 having absorbed the liquid.

The sealer 26 may seal the vicinity of the liquid inlet 235 where the wick 25 is exposed from the first chamber C1. When the second container 30 is coupled to the upper side of the first container 20, the sealer 26 may seal between the first container 20 and the second container 30.

The sealing wall 266, 267 may protrude toward the second container 30. The sealing wall 266, 267 may be in close contact with the second container 30. The sealing wall 266, 267 may surround the liquid inlet 235.

Accordingly, it is possible to prevent the liquid discharged from the second container 30 from leaking into the gap between the first container 20 and the second container 30.

The first sealing wall 266 may surround the liquid inlet 235 and the perimeter 2522 of the second wick part 252. The first sealing wall 266 may be in close contact with a lower portion of the second container 30. The first sealing wall 266 may be in close contact with a protruding portion formed on an inner side of the recessed portion 315. For example, the first sealing wall 266 may be in close contact with the bracket 317. The bracket 317 and the first sealing wall 266 may surround the perimeter 2522 of the second wick part 252. Accordingly, the bracket 317 may not only secure the absorbing portion 316, but also press the first sealing wall 266 to seal the vicinity of the second wick part 252 and the liquid inlet 235.

The second sealing wall 267 may protrude to be higher than the first sealing wall 266. The second sealing wall 267 may be disposed horizontally outward from the first sealing wall 266 to surround the first sealing wall 266. The second sealing wall 267 may be in close contact with the lower portion of the second container 30. The second sealing wall 267 may be inserted into the groove formed by the recessed portion 315 and be in close contact with the recessed portion 315.

Accordingly, the first sealing wall 266 may seal the vicinity of the second wick part 252 and the liquid inlet 235. In addition, even if the liquid goes over to the outside of the first sealing wall 266, it may be sealed by the second sealing wall 267.

Referring to FIG. 11, the first channel CN1 may be formed on the left side of the first chamber C1. The wick 25 and the heater 2531 may be disposed on the right side of the first chamber C1. The first channel CN1 may be provided with the first airflow inlet 241 and the first airflow outlet 242. The first airflow inlet 241 may be formed at one end of the first channel CN1. The first airflow outlet 242 may be formed at the other end of the first channel CN1. The first channel CN1 may be misaligned from the wick 25 based on the vertical direction. The wick 25 may be spaced apart from the gap between the first airflow inlet 241 and the first airflow outlet 242. Unlike the drawings, at least one of the first airflow inlet 241 and the first airflow outlet 242 may be formed as a lateral wall of the first container 20 is open in the first channel CN1.

When the first container 20 is coupled to the body 10, the second airflow inlet 1411 formed as one side of the body 10 is open may communicate with the first airflow inlet 241. In the vicinity of the second airflow inlet 1411, the gap between the body 10 and the first container 20 may be sealed. For example, the hook 125 may seal between the body 10 and the first container 20 in the vicinity of the second airflow inlet 1411.

When the second container 30 is coupled to the first container 20, the first airflow outlet 242 may communicate with a lower end of the second channel CN2. The first channel CN1 and the second channel CN2 may communicate with each other to form a single channel CN. The second channel CN2 may communicate with the second airflow outlet 354.

When the user inhales air while holding the mouthpiece 35 in the mouth, the outside air may pass sequentially through the second airflow inlet 1411, the first channel CN1, the second channel CN2, and the second airflow outlet 354 and be provided to the user. An aerosol may be generated in the first chamber C1 spaced apart from the first channel CN1. The air passing through the first channel CN1 may flow together with the air in the first chamber C1 and the aerosol due to the suction power and the pressure difference. The air and aerosol may pass through the first gap 227c and the second gap 227d between the supports 227 and flow into the first channel CN1.

Accordingly, it is possible to allow the air to flow only on one side of the first chamber C1, thereby reducing the size of the channel and reducing or optimizing the size of the aerosol generating device. In addition, the air flow resistance may be reduced from the structure that supports the wick 25.

The airflow sealing portion 268 may be in close contact with the lower portion of the second container 30 in the vicinity of the lower end of the second channel CN2. The airflow sealing portion 268 may surround the lower end of the second channel CN2 and the first airflow outlet 242. The airflow sealing portion 268 may seal between the first container 20 and the second container 30, at a lower end of the airflow discharge channel 340 and in the vicinity of the first airflow outlet 242.

Accordingly, it is possible to prevent the air passing through the airflow discharge channel 340 from the first airflow outlet 242 from leaking between the first container 20 and the second container 30 and improve the flow efficiency of air.

As used herein, the terms "substantially", "approximately", "generally", and "about" in reference to a given parameter, property, or condition may include a degree that one of ordinary skill in the art would understand that the given parameter, property, or condition is met with a small degree of variance, such as within acceptable manufacturing tolerances. For example, a parameter that is substantially met may be at least about 90% met, at least about 95% met, or at least about 99% met.

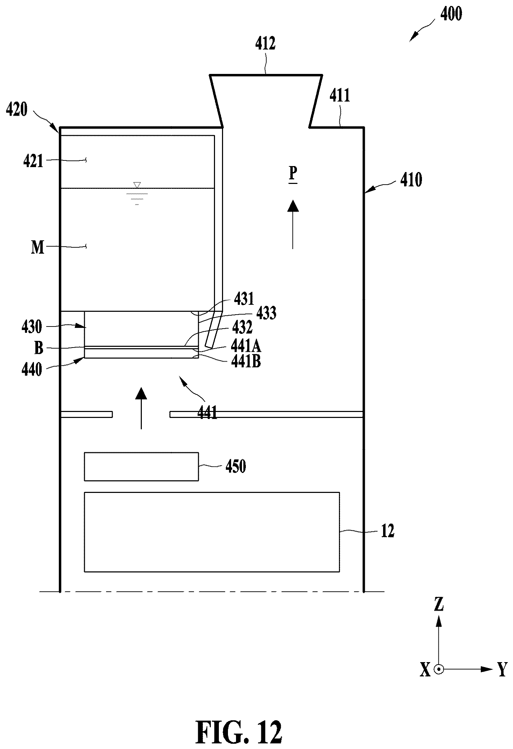

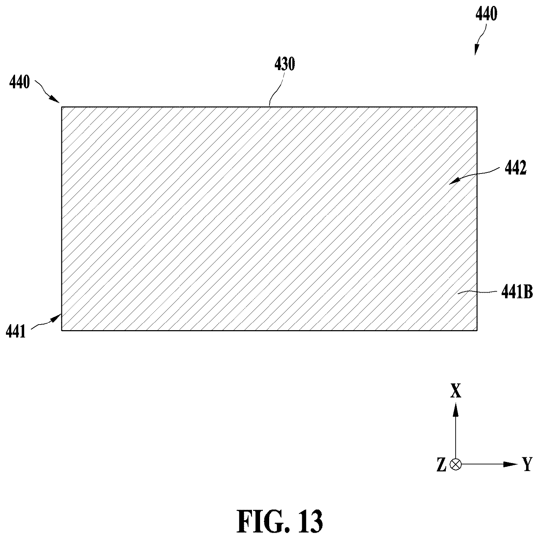

FIG. 12 is a cross-sectional view of an aerosol generating device according to an embodiment. FIG. 13 is a plan view of a heater according to an embodiment.

Referring to FIGS. 12 and 13, an aerosol generating device 400 may include the controller 12 and a housing 410 that may be referred to as a "body". The housing 410 may include a mouth end portion 411, and a device end portion (not shown) opposite to the mouth end portion 411. The housing 410 may include a mouthpiece 412. The mouthpiece 412 may be disposed at the mouth end portion 411 or adjacent to the mouth end portion 411.

The aerosol generating device 400 may include a chamber 420. The chamber 420 may be configured to be coupled into the housing 410 and/or decoupled from the housing 410. The chamber 420 may include a reservoir 421. The reservoir 421 may contain an aerosol generating material M. The aerosol generating material M may include a liquid composition.

The housing 410 may include an airflow path P leading to the mouthpiece 412. The chamber 420 and the airflow path P may be arranged in a circumferential direction (e.g., in a circumferential direction with respect to the Z-axis) of the housing 410. The airflow path P may be defined between the housing 410 and one side surface (e.g., a +Y normal direction surface in FIG. 12) of the reservoir 421.

In an embodiment not shown, the chamber 420 may include a plurality of reservoirs 421.

The aerosol generating device 400 may include a wick 430 configured to receive the aerosol generating material M from the reservoir 421. The wick 430 may be configured to deliver the aerosol generating material from the chamber 420 to the heater 440. The heat generated by the heater 440 may cause the aerosol generating material contained in the wick 430 to have a phase change. The wick 430 may include a first wick end portion 431 connected to the reservoir 421. The wick 430 may include a second wick end portion 432 opposite to the first wick end portion 431. The wick 430 may include a wick extension 433 extending between the first wick end portion 431 and the second wick end portion 432.

The wick 430 may include a rectangular cross-sectional shape. In an embodiment not shown, the wick 430 may include a substantially circular or elliptical cross-sectional shape. In an embodiment not shown, the wick 430 may include a polygonal cross-sectional shape.

The wick 430 may include a ceramic material. The wick 430 including a ceramic material may have high rigidity or heat resistance. The wick 430 including a ceramic material may be used repeatedly without being replaced while the chamber 420 is replaced multiple times. The wick 430 including a ceramic material may be fixed easily in place relative to the reservoir 421. Another component (e.g., the heater 440) may be fixed to the wick 430 including a ceramic material. The wick 430 including a ceramic material may be configured to be separated from the chamber 420. The wick 430 may not be included in a cartridge (e.g., the cartridge 19 of FIGS. 1 to 11) including the chamber 420. This may reduce the cost of manufacturing the cartridge and enable the semi-permanent use of the wick 430.

The cross-sectional area (e.g., the area of a +Z normal direction surface) of the wick 430 may be less than the cross-sectional area (e.g., the area of a -Z normal direction surface) of the reservoir 421. In an embodiment not shown, the cross-sectional area (e.g., the area of the +Z normal direction surface) of the wick 430 may be substantially the same as the cross-sectional area (e.g., the area of the -Z normal direction surface) of the reservoir 421. In an embodiment not shown, the cross-sectional area (e.g., the area of the +Z normal direction surface) of the wick 430 may be greater than the cross-sectional area (e.g., the area of the -Z normal direction surface) of the reservoir 421.

The aerosol generating device 400 may include a heater 440. The heater 440 may be configured to generate heat by surface plasmon resonance (SPR). "SPR" refers to collective oscillations of electrons propagating along an interface of metal particles with a medium. For example, the collective oscillation of electrons of metal particles may be caused by light propagating from the outside of the heater 440. The excitation of electrons of metal particles may generate thermal energy, and the generated thermal energy may be transferred within an environment to which the heater 440 is applied.

The heat generated by the heater 440 may cause the aerosol generating material contained in the wick 430 to have a phase change.

The heater 440 may include a substrate 441. The substrate 441 may include a first substrate end portion 441A connected to the wick 430. In an embodiment, the heater 440 may include a bonding layer B attaching the second wick end portion 432 to the first substrate end portion 441A between the two. The bonding layer B may be selected from a material that does not generate a harmful gas to a human body when heated by the heater 440. The substrate 441 may include a second substrate end portion 441B opposite the first substrate end portion 441A. The second substrate end portion 441B may be at least partially open. For example, the second substrate end portion 441B may receive light emitted from a light source 450.

The substrate 441 may be formed of various materials. For example, the substrate 441 may be formed of a metal material such as aluminum, glass, silicon (Si), silicon oxide (SiO2), sapphire, polystyrene, polymethyl methacrylate, and/or any other suitable material. The substrate 441 may be formed of any one or combination of glass, silicon (Si), silicon oxide (SiO2), and sapphire. The substrate 441 may include a material having a relatively low heat transfer coefficient. This may allow heat to be transferred only to a partial area on the substrate 441.

The substrate 441 may exhibit electrical conductivity. The substrate 441 may exhibit electrical insulating properties.

The substrate 441 may be formed of a material having any thermal conductivity suitable for use in an environment in which the heater 440 is disposed. For example, the substrate 441 may have a thermal conductivity of about 0.6 Watts per meter-Kelvin (W/mK) or less, about 1 W/mK to about 2 W/mK, about 2 W/mK to about 5 W/mK, about 5 W/mK to about 10 W/mK, about 10 W/mK to about 100 W/mK, or about 100 W/mK to about 200 W/mK, at a pressure of 1 bar and a temperature of 25°C. The substrate 441 may have a thermal conductivity of about 0.6 W/mK or less, about 1.3 W/mK, about 148 W/mK, or about 46.06 W/mK, at a pressure of 1 bar and a temperature of 25°C.

The heater 440 may include a plurality of metal particles 442 arranged on the substrate 441. The plurality of metal particles 442 may be deposited on the second substrate end portion 441B through a suitable deposition process (e.g., physical vapor deposition). A structure in which the plurality of metal particles 442 are deposited on the heater 440 connected to the wick 430 may not require a separate connecting component (e.g., a lead wire, etc.), and a risk from a failure (e.g., poor contact of the lead wire) in the separate connecting component may be substantially eliminated. For example, because the wick 430 is rigid, including ceramic, the heater 440 may be easily attached or coupled fit-to-fit thereto, and, because the plurality of metal particles 442 is arranged on the heater 440 through a deposition process, no separate connecting components are required between them. This may increase the durability of the aerosol generating device 400.

Electrons that form each of the plurality of metal particles 442 may vibrate collectively upon receiving light. The excitation of electrons may generate thermal energy.

The plurality of metal particles 442 may be nanoscale. For example, the plurality of metal particles 442 may have an average maximum diameter of about 1 µm or less. The plurality of metal particles 442 may have an average maximum diameter of about 700 nanometers (nm) or less, about 600 nm or less, about 500 nm or less, about 400 nm or less, about 300 nm or less, about 200 nm or less, about 150 nm or less, or about 100 nm or less.

The plurality of metal particles 442 may be formed of any material suitable for generating heat. For example, the plurality of metal particles 442 may include at least one of gold, silver, copper, palladium, platinum, aluminum, titanium, nickel, chromium, iron, cobalt, manganese, rhodium, and ruthenium, or a combination thereof.

The plurality of metal particles 442 may be formed of any material suitable for generating heat by interacting with light of a predetermined wavelength band (e.g., a visible light wavelength band, that is, about 380 nm to about 780 nm). For example, the plurality of metal particles 442 may include at least one of gold, silver, copper, palladium, and platinum, or a combination thereof.

The plurality of metal particles 442 may be formed of a metal material having an average maximum absorbance. Here, the average maximum absorbance may be defined as an absorbance substantially having a peak in a predetermined wavelength band. A wavelength band corresponding to the absorbance may be understood as a specific wavelength band in which the plurality of metal particles 442 resonate. For example, the plurality of metal particles 442 may be formed of a metal material having an average maximum absorbance in a wavelength band between about 430 nm and about 450 nm, between about 480 nm and about 500 nm, between about 490 nm and about 510 nm, between about 500 nm and about 520 nm, between about 550 nm and about 570 nm, between about 600 nm and about 620 nm, between about 620 nm and about 640 nm, between about 630 nm and about 650 nm, between about 640 nm and about 660 nm, between about 680 nm and about 700 nm, or between about 700 nm and about 750 nm. The average maximum absorbance of the plurality of metal particles 442 may vary depending on the type of the substrate 441, the size of a metal layer, the shape of the metal layer, the type of the wick 430, the size of the wick 430, and/or the shape of the wick 430.

The plurality of metal particles 442 may form a metal layer that substantially covers the whole surface of the second substrate end portion 441B. In an embodiment, the metal layer is disposed on the substrate 441, and the metal layer may include the plurality of metal particles 442. In an embodiment not shown, the shape that may be formed by the plurality of metal particles 442 is not limited, and various shapes may be formed.

The metal layer may be about 10 nm or less. When the metal layer has a thickness exceeding 10 nm, the exothermic reaction of the plurality of metal particles 442 forming the metal layer may decrease, and consequently, the thermal efficiency of the heater 440 may decrease.

In an embodiment not shown, the heater 440 may include an absorbing layer configured to absorb light. The absorbing layer may be configured to absorb light penetrating through the substrate 441 in a direction from the second substrate end portion 441B of the substrate 441 toward the first substrate end portion 441A thereof. The absorbing layer may increase the light use efficiency of the heater 440. The absorbing layer may be disposed on or above the second substrate end portion 441B. The absorbing layer may include a material of a color (e.g., black) with relatively high saturation. For example, the absorbing layer may have a heat resistance of about 800 degrees Celsius.

In an embodiment not shown, the heater 440 may include a reflective layer. The reflective layer may be configured to reflect light penetrating through the substrate 441 in a direction from the first substrate end portion 441A of the substrate 441 toward the second substrate end portion 441B thereof to the second substrate end portion 441B. The reflective layer may be disposed on the absorbing layer. The reflective layer may include any material suitable for reflecting light. For example, the reflective layer may include at least one of gold, silver, copper, or any other metal material suitable for reflection, or a combination thereof. The reflective layer may have any thickness suitable for reflecting light. For example, the thickness of the reflective layer may be about 10 nm or less.

In an embodiment not shown, the heater 430 may include a heat transfer plate. The heat transfer plate may be configured to transfer the heat generated by SPR to the wick 430. The heat transfer plate may be disposed between the substrate 441 and the wick 430. The heat transfer plate may transfer heat by conduction. The heat transfer plate may transfer heat to the wick 430 by convection or radiation. The heat transfer plate may include a metal material. For example, the heat transfer plate 435 may include aluminum or copper.

The aerosol generating device 400 may include at least one light source 450 configured to emit light. For example, the at least one light source 450 may include a light emitting diode or a laser light source. The at least one light source 450 may be configured to transmit light to a heater. In an embodiment not shown, the aerosol generating device 400 may use a light source outside the aerosol generating device 400 without an internal light source.

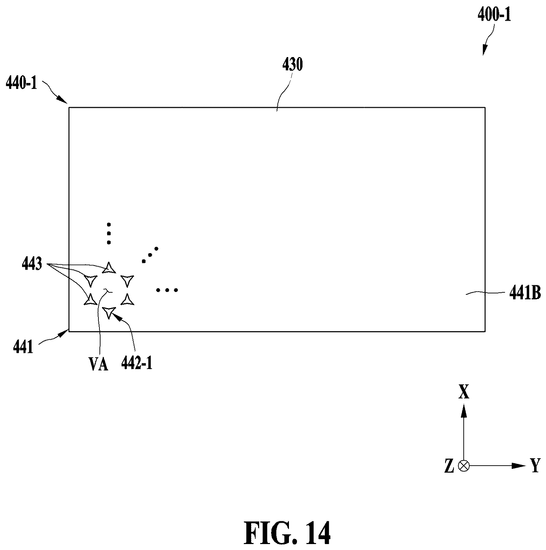

FIG. 14 is a plan view of a heater according to an embodiment.

Referring to FIG. 14, an aerosol generating device 400-1 may include the wick 430 and a heater 440-1.

The heater 440-1 may include the substrate 441. The heater 440-1 may include the plurality of metal particles 442 arranged on the second substrate end portion 441B. The plurality of metal particles 442-1 may form a plurality of metal prisms 443. In an embodiment, the plurality of metal prisms 443 is arranged on the substrate 441, and the plurality of metal prisms 443 may include the plurality of metal particles 442.

The plurality of metal prisms 443 may define a void area VA surrounded by the plurality of metal prisms 443 on the second substrate end portion 441B of the substrate 441. For example, the void area VA may have a substantially circular or elliptical shape, and the plurality of metal prisms 443 may be arranged in a circumferential direction of the void area VA.

The void area VA may have an average maximum diameter of about 10 nm or greater, about 50 nm or greater, about 90 nm or greater, about 100 nm or greater, about 150 nm or greater, about 200 nm or greater, about 300 nm or greater, about 350 nm or greater, about 450 nm or greater, or about 500 nm or greater. The void area VA may have an average maximum diameter of about 450 nm or greater. The void area VA may have an average maximum diameter of about 350 nm or greater.

The void area VA may have an average maximum diameter of about 1,000 nm or less, about 900 nm or less, about 800 nm or less, about 700 nm or less, about 600 nm or less, or about 550 nm or less.

The plurality of metal prisms 443 may be positioned to be physically separated from each other on the second substrate end portion 441B of the substrate 441. For example, the plurality of metal prisms 443 may be apart from each other at determined intervals along the perimeter (e.g., the circumference) of the void area VA.

The plurality of metal prisms 443 may be apart from each other at substantially equal intervals. The interval between any one pair of adjacent metal prisms among the plurality of metal prisms 443 may be different from the interval between another pair of adjacent metal prisms.

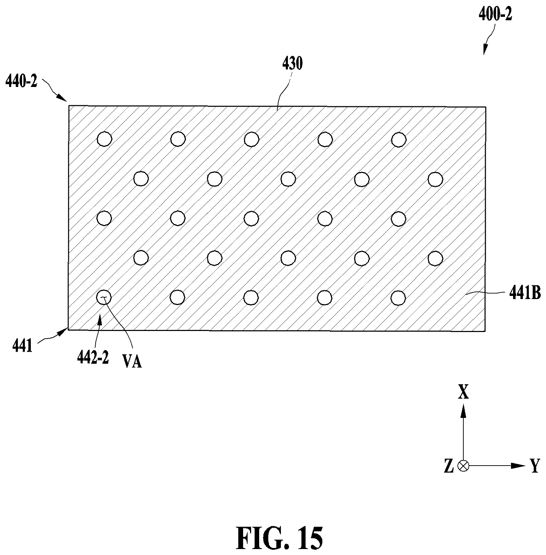

FIG. 15 is a plan view of a heater according to an embodiment.

Referring to FIG. 15, an aerosol generating device 400-2 may include the wick 430 and a heater 440-2.

The heater 440-2 may include the substrate 441. The heater 440-2 may include a plurality of metal particles 442-2 arranged on the second substrate end portion 441B. The plurality of metal particles 442-2 may form a substantially single net-shaped structure.

The net-shaped structure may define a plurality of void areas VAs. For example, the net-shaped structure may substantially define the whole perimeter (e.g., circumference) of the plurality of void areas VAs.

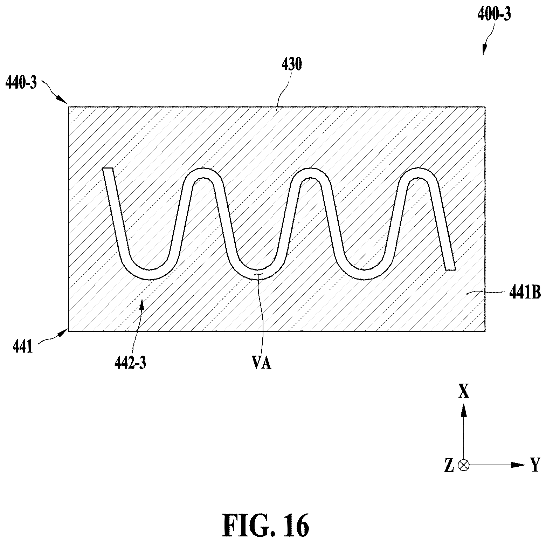

FIG. 16 is a plan view of a heater according to an embodiment.

Referring to FIG. 16, an aerosol generating device 400-3 may include the wick 430 and a heater 440-3.

The heater 440-3 may include the substrate 441. The heater 440-3 may include a plurality of metal particles 442-3 arranged on the second substrate end portion 441B. The plurality of metal particles 442-3 may form a substantially single shaped structure. The structure may define a serpentine-shaped void area V. In an embodiment not shown, the void region VA may be connected to an end portion (e.g., a +X direction end portion, a -X direction end portion, a +Y direction end portion, or a -Y direction end portion) of the second substrate end portion 441B.

In an embodiment not shown, the plurality of metal particles 442-3 may form a serpentine-shaped structure. For example, the plurality of metal particles 442-3 may be arranged on a portion defined as the void area VA in FIG. 16, and an area where the plurality of metal particles 442-3 are arranged in FIG. 16 may be defined as the void area VA.

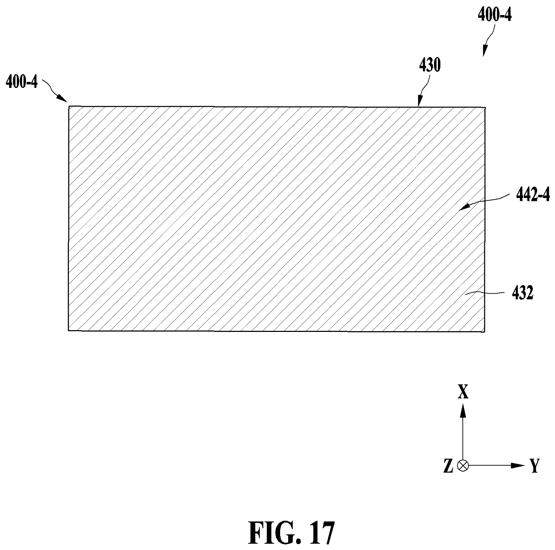

FIG. 17 is a plan view of a heater according to an embodiment.

Referring to FIG. 17, an aerosol generating device 400-4 may include the wick 430 and a heater 440-4.

The heater 440-4 may not include a substrate (e.g., the substrate 441 of FIGS. 12 to 16). The heater 440- may include a plurality of metal particles 442-4 arranged on the wick 430. The plurality of metal particles 442-4 may be deposited on the second wick end portion 432 through a suitable deposition process (e.g., physical vapor deposition). The shape in which the plurality of metal particles 442-4 is arranged is not limited and may vary. For example, the plurality of metal particles 442-4 may form a metal layer that substantially covers the whole surface of the second wick end portion 432. In an embodiment, the metal layer is arranged on the wick 430, and the metal layer may include the plurality of metal particles 442-4.

In an embodiment not shown, the shape that may be formed by the plurality of metal particles 442-4 on the wick 430 is not limited, and various shapes may be formed.

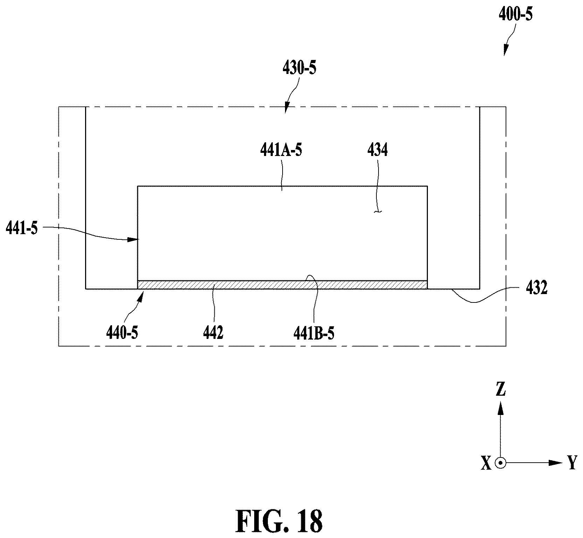

FIG. 18 is an enlarged cross-sectional view of a portion of an aerosol generating device according to an embodiment.

Referring to FIG. 18, an aerosol generating device 400-5 may include a wick 430-5 and a heater 440-5. The heater 440-5 may include a substrate 441-5 configured to be coupled fit-to-fit to the wick 430-5.

The wick 430-5 may include a recess 434 formed in a direction from the second wick end portion 432 toward a first wick end portion (not shown). The width or diameter (e.g., width or diameter in an X-axis or Y-axis direction) of the recess 434 may be substantially the same as the width or diameter (e.g., width or diameter in the X-axis or Y-axis direction) of the substrate 441-5. A second substrate end portion 441B-5 of the substrate 441-5 may be substantially on the same plane as that of the second wick end portion 432.

In an embodiment not shown, the second substrate end portion 441B-5 may not be substantially on the same plane as that of the second wick end portion 432.

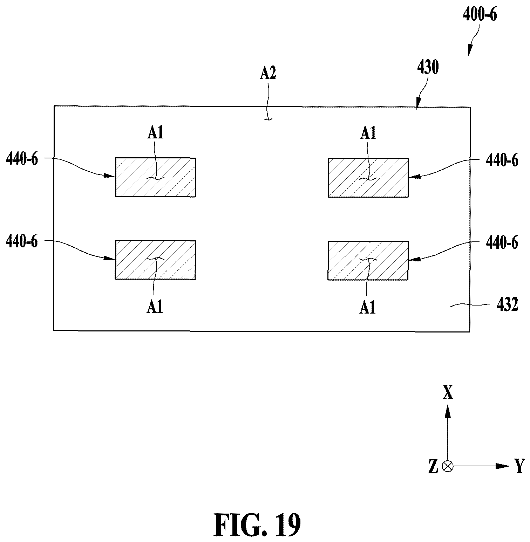

FIG. 19 is a plan view of a heater according to an embodiment.

Referring to FIG. 19, an aerosol generating device 400-6 may include the wick 430 and a heater 440-6.

The second wick end portion 432 may include a plurality of first areas A1 where the heater 440-6 may be disposed. The second wick end portion 432 may include at least one second area A2 different from the plurality of first areas A1. The plurality of first areas A1 is not limited and may form various shapes. For example, to form a net structure as shown in FIG. 15, an area defined by the plurality of void areas VAs in FIG. 15 may be defined by the plurality of first areas A1.

Even though the heater 440-6 disposed in any one of the first areas A1 loses its function, the aerosol generating device 400-8 may operate through the heater 440-6 disposed in another first area A1.

Selectively, the heater 440-6 may include a substrate (e.g., the substrate 441 of FIGS. 12 to 16). When the heater 440-6 includes a substrate, a plurality of metal particles (e.g., the plurality of metal particles 442 of FIGS. 12 and 13) may be arranged on the substrate. When the heater 440-6 does not include a substrate, a plurality of metal particles may be arranged on the wick 430.

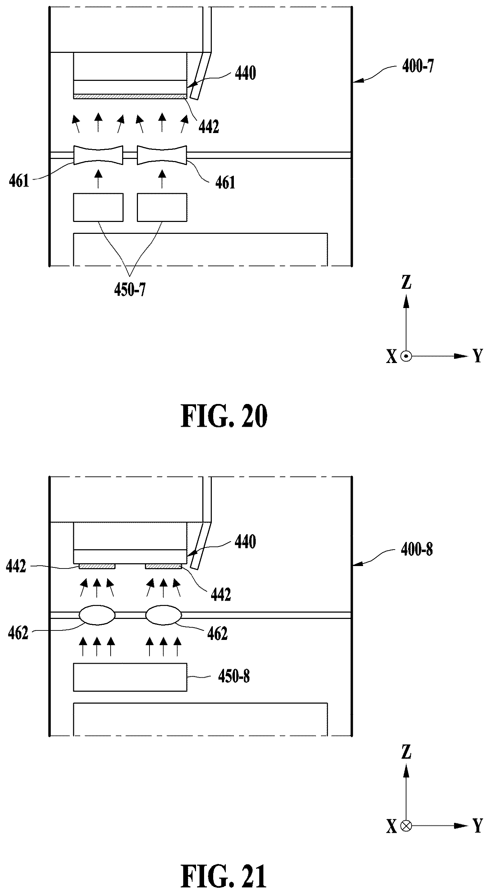

FIG. 20 is an enlarged cross-sectional view of a portion of an aerosol generating device according to an embodiment.

Referring to FIG. 20, an aerosol generating device 400-7 may include the heater 440 and at least one light source 450-7.

The at least one light source 450-7 may include a laser. The laser may have a suitable type and/or size for being included in the aerosol generating device 400-7. For example, the laser may include a solid-state laser and/or a semiconductor laser.

The aerosol generating device 400-7 may include a concave lens 461 configured to refract light emitted from the at least one light source 450-7. The concave lens 461 may increase the efficiency of light use. The concave lens 461 may be disposed between the heater 440 and the at least one light source 450-7. Light passing through the concave lens 461 may be transmitted to the plurality of metal particles 442. Even when the at least one light source 450-7 includes a single laser, the concave lens 461 may transmit light relatively evenly to the plurality of metal particles 442.

FIG. 21 is an enlarged cross-sectional view of a portion of an aerosol generating device according to an embodiment.

Referring to FIG. 21, an aerosol generating device 400-8 may include the heater 440 and at least one light source 450-8.

The at least one light source 450-8 may include a light emitting diode. The light emitting diode may have a suitable type and/or size for being included in the aerosol generating device 400-8.

The aerosol generating device 400-8 may include a convex lens 462 configured to refract light emitted from the at least one light source 450-8. The convex lens 462 may increase the efficiency of light use. The convex lens 462 may be disposed between the heater 440 and the at least one light source 450-8. Light passing through the convex lens 462 may be transmitted to the plurality of metal particles 442. Even though the intensity of light emitted from the light emitting diode is insufficient to cause SPR, the convex lens 462 may focus the light to cause SPR.

In an embodiment not shown, the at least one light source 450-8 may include different types of light sources. For example, the at least one light source 450-8 may include a laser and a light-emitting diode. For example, the at least one light source 450-8 may include an external light source.

Some embodiments of the disclosure described above or other embodiments are not mutually exclusive or distinct from each other. Some embodiments of the disclosure described above or other embodiments may be used jointly or combined with each other in configuration or function.

For example, a configuration A described in one embodiment and/or drawing and a configuration B described in another embodiment and/or drawing may be combined with each other. Namely, although the combination between the configurations is not directly described, the combination is possible except in cases where it is described that the combination is impossible.

The above detailed description should not be construed in all aspects as limiting and should be considered illustrative. The scope of the present disclosure should be determined by rational interpretation of the appended claims, and all variations within the scope of equivalents of the present disclosure are included in the scope of the present disclosure.

## Claims

1. An aerosol generating device comprising: a reservoir configured to store an aerosol generating material; a ceramic wick that is configured to receive the aerosol generating material from the reservoir and comprises a ceramic material; and a heater that is configured to heat the aerosol generating material by surface plasmon resonance and is disposed in the ceramic wick.

2. The aerosol generating device of claim 1, wherein the heater comprises: a substrate; and a plurality of metal particles arranged on the substrate.

3. The aerosol generating device of claim 2, wherein the substrate is configured to be coupled fit-to-fit to the ceramic wick.

4. The aerosol generating device of claim 2, wherein the substrate is attached to the ceramic wick.

5. The aerosol generating device of claim 2, wherein the plurality of metal particles forms a metal layer.

6. The aerosol generating device of claim 2, wherein the plurality of metal particles forms a plurality of metal prisms, and the plurality of metal prisms defines a void area surrounded by the plurality of metal prisms.

7. The aerosol generating device of claim 2, wherein the plurality of metal particles forms a structure having a substantially single net shape, and
the structure defines a plurality of void areas.

8. The aerosol generating device of claim 2, wherein the plurality of metal particles forms a structure having a substantially single shape, and the structure defines a plurality of void areas having a serpentine shape.

9. The aerosol generating device of claim 1, wherein the ceramic wick further comprises a first wick end portion facing at least a portion of the reservoir, a second wick end portion that is opposite to the first wick end portion and faces at least a portion of the heater, and a wick extension extending between the first wick end portion and the second wick end portion, and
the heater comprises a plurality of metal particles deposited on the second wick end portion.

10. The aerosol generating device of claim 9, wherein the second wick end portion comprises a plurality of first areas and a second area different from the plurality of first areas, and the plurality of metal particles is arranged in the plurality of first areas.

11. The aerosol generating device of claim 1, further comprising: at least one light source configured to transmit light to the heater.

12. The aerosol generating device of claim 11, wherein the at least one light source comprises a light emitting diode, and the aerosol generating device further comprises at least one convex lens disposed between the heater and the at least one light source.

13. The aerosol generating device of claim 11, wherein the at least one light source comprises a laser, and the aerosol generating device further comprises at least one concave lens disposed between the heater and the at least one light source.

14. The aerosol generating device of claim 1, wherein the heater comprises a plurality of metal particles having a random size.

15. The aerosol generating device of claim 1, further comprising: an airflow path defined on a side of the reservoir.
